# EUROPEAN PATENT SPECIFICATION

(11) **EP 4 042 637 B1**
(45) Date of publication and mention of the grant of the patent: **21.05.2025**
(21) Application number: 20775508.3
(22) Date of filing: 04.09.2020
(51) Int. Cl.: H04L 41/0816, H04L 41/0823, H04L 41/5025, H04L 43/0817, H04W 4/50, H04L 47/70, H04L 47/80, H04L 65/1063, H04L 65/80, H04W 72/54, H04W 76/20, H04W 84/04, H04L 47/74, H04L 47/83, H04L 65/1033, H04N 21/238, H04N 21/442, H04N 21/658, H04N 21/61

(54) **APPLICATION CLIENT PERFORMANCE INDICATOR MANAGEMENT**
VERWALTUNG DES LEISTUNGSINDIKATORS EINES ANWENDUNGS-CLIENTS
GESTION D'INDICATEUR DE PERFORMANCE DE CLIENT D'APPLICATION

(30) Priority: 09.10.2019 US 201962913121 P; 03.09.2020 US 202017011578
(43) Date of publication of application: 17.08.2022
(73) Proprietor: QUALCOMM INCORPORATED, San Diego, California 92121-1714 (US)
(72) Inventor: SOLOWAY, Alan, San Diego, California 92121-1714 (US); HALL, Edward Robert, San Diego, California 92121-1714 (US)
(74) Representative: Bardehle Pagenberg Partnerschaft mbB Patentanwälte Rechtsanwälte
(86) International application number: PCT/US2020/049391
(87) International publication number: WO 2021/071611

(56) References cited:
- WO-A1-2017/070540
- US-A1- 2013 165 084
- "3 Generation Partnership Project; Technical Specification Group Services and System Aspects; Study on application architecture for enabling Edge Applications; (Release 17)", no. V1.0.0, 12 September 2019 (2019-09-12), pages 1 - 78, XP051784519, Retrieved from the Internet <URL:ftp://ftp.3gpp.org/Specs/archive/23_series/23.758/23758-100.zip 23758-100.doc> [retrieved on 20190912]
- "Multi-access Edge Computing (MEC); Phase 2: Use Cases and Requirements", vol. MEC, no. V2.1.1, 25 October 2018 (2018-10-25), pages 1 - 66, XP014329212, Retrieved from the Internet <URL:http://www.etsi.org/deliver/etsi_gs/MEC/001_099/002/02.01.01_60/gs_MEC002v020101p.pdf> [retrieved on 20181025]

## Description

### BACKGROUND

The following relates generally to wireless communications, and more specifically to application client performance indicator management.

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include a number of base stations or network access nodes, each simultaneously supporting communication for multiple communication devices, which may be otherwise known as user equipment (UE).

In some cases, software applications may not be configured for performance on some devices. For example, a software application may include multiple versions. A current version may include a new feature that a previous version does not include. When a device installs the previous version, the device may not be enabled to implement the new feature. 3GPP TR 23.758 (3rd Generation Partnership Project; Technical Specification Group Services and System Aspects; Study on application architecture for enabling Edge Applications; Release 17; V1.0.0; 2019-09) is a technical report capturing the study on application architecture for enabling edge applications over 3GPP networks. The aspects of the study include identifying architecture requirements (e.g. discovery of edge services, authentication of the clients), supporting application layer functional model and corresponding solutions to enable the deployment of applications on the edge of 3GPP networks, with minimal impact to edge-based applications on the UE. ETSI GS MEC 002 (Multi-access Edge Computing (MEC); Phase 2: Use Cases and Requirements; V2.1.1; 2018-10) specifies the requirements for Multi-access Edge Computing with the aim of promoting interoperability and deployments.

### SUMMARY

The invention is defined in the independent claims.

The described techniques relate to improved methods, systems, devices, and apparatuses that support application client performance indicator management. Generally, the described techniques provide for wireless communications between a user equipment (UE) and an edge server of an edge data network (e.g., an edge application server, or edge enabler server, or another edge device as described herein).

### BRIEF DESCRIPTION OF THE DRAWINGS

FIG. 1 illustrates an example of a system for wireless communications that supports application client performance indicator management in accordance with aspects of the present disclosure.
FIG. 2 illustrates an example of a wireless communications system that supports application client performance indicator management in accordance with aspects of the present disclosure.
FIG. 3 illustrates an example of a system diagram that supports application client performance indicator management in accordance with aspects of the present disclosure.
FIGs. 4 and 5 show diagrams of devices that support application client performance indicator management in accordance with aspects of the present disclosure.
FIG. 6 shows a diagram of a communications manager that supports application client performance indicator management in accordance with aspects of the present disclosure.
FIG. 7 shows a diagram of a system including a device that supports application client performance indicator management in accordance with aspects of the present disclosure.
FIGs. 8 and 9 show diagrams of devices that support application client performance indicator management in accordance with aspects of the present disclosure.
FIG. 10 shows a diagram of a communications manager that supports application client performance indicator management in accordance with aspects of the present disclosure.
FIG. 11 shows a diagram of a system including a device that supports application client performance indicator management in accordance with aspects of the present disclosure.
FIGs. 12 through 15 show flowcharts illustrating methods that support application client performance indicator management in accordance with aspects of the present disclosure.

### DETAILED DESCRIPTION

In some cases, wireless communications of a user equipment (UE) may include communicating data associated with an application client operating on the UE. The application client may include a software application (e.g., mobile software application) executing on the UE. In some cases, one or more application clients may be operating or executing on the UE simultaneously. In some cases, the one or more application clients operating on the UE may adversely affect UE performance. For example, one or more application clients operating on the UE may adversely affect performance of the UE such as exceeding a UE battery level threshold, exceeding a UE battery drainage rate threshold, exceeding a processor usage threshold (e.g., for a central processing unit (CPU) of the UE or a graphical processor of UE, etc.), exceeding a temperature threshold for the UE or a component of the UE, exceeding a memory usage threshold, dropping below an available memory threshold, etc., which may result in a relatively poor user experience.

In some cases, edge data networks may be configured to mitigate at least a portion of the relatively poor user experiences when UE performance is adversely affected. Edge data networks bring data network resources (e.g., processing, storage, networking) closer and/or in greater supply to UEs (e.g., increased bandwidth, increased processing power, increased processing capabilities, increased storage, increased memory, etc.). Thus, edge data networks may be leveraged by UEs to mitigate adverse UE performance and maintain some level of UE performance. In some wireless communications systems, an application client may be unaware of edge data network support, nor consider that processing of application data may be offloaded to the edge data network. Based on the present techniques, a UE or an edge data network (or both) may be enabled to signal, via a wireless network (e.g., a cellular network), an adjustment to one or more default performance indicators for an application client to enhance UE performance and/or the user experience.

In some cases, an application client of the UE may not be configured to operate in conjunction with edge services of an edge data network, which may result in a reduced quality of service (e.g., a quality of service below a threshold) or a relatively poor user experience (e.g., lag, relatively high latency, processes freezing up, etc.) on the UE. For example, when an application client is not aware of edge service support, the application client may lack the ability to offload processing to the edge data network, which may result in a poor user experience. In another example, the performance constraints provided by the application client or edge data network may not represent the accuracy that would benefit UE processing in the edge data network. Thus, in some cases the UE or edge data network, or both, may be configured with detection mechanisms to enable the UE or edge data network to adjust the performance constraints that the UE provides to the edge data network.

In some wireless communications systems, an application client (e.g., for a gaming application, a media-rich application, etc.) operating on a UE may be unaware that edge services of an edge data network are available because the version of the application client was not configured to use edge services.

In some cases, an edge data network may include a cloud-based network. In some cases, the edge data network may include edge devices that are situated as close geographically to a UE as possible. Thus, an edge data network may, for example, permit the UE to offload some or all of the processing of application data of at least one application client to the edge data network. In some cases, a set of default performance indicators may be defined for one or more application clients that is stored in a UE performance profile for the one or more application clients, and the UE may signal adjustments to one or more of the default performance indicators. For example, the UE may modify one or more default performance indicators of the UE performance profile for an application client, and may store the modified default performance indicators, along with any unmodified default performance indicators, in a UE modified performance profile for the one or more application clients. In some cases, edge data networks may include edge devices that are configured to provide relatively high speed data communications between the UE and network resources that may be leveraged by UEs to offload to the edge data network one or more processes of application clients operating on the UE.

With edge data network architecture, complex event processing may occur on the UE as well as on one or more edge devices of the edge data network relatively near the UE, which enables the processing of data from application clients of the UE to be processed faster in some circumstances than the UE performing the processing alone. Also, the processing of data from application clients on the UE and on one or more edge devices of the edge data network relatively near the UE, eliminates round-trip issues that the UE would experience if the UE communicated only with a wireless network such as a cellular network instead of a cellular network and an edge data network.

An edge device may provide an entry point into enterprise or service provider core networks (e.g., a first core network and/or a second core network). Functions of edge devices include transmission, routing, processing, monitoring, filtering, translation and storage of data passing between one or more networks. In some cases, an edge device may serve as an entry point into a carrier (e.g., 3GPP network), a service provider, or an enterprise primary network. In some cases, an edge device may provide network translation between networks that use different protocols (e.g., translating and transferring packets and cells in between an Ethernet and ATM network). In some cases, edge devices may provide connections into carrier and service provider networks (e.g., a cellular network of wireless communications network). In some cases, an edge device may connect a local area network to a high speed switch or backbone (such as an ATM switch). In some cases, an edge device may include immediate or direct connection to the Internet or an external non-propriety network. Examples of edge devices may include network nodes, network routers, network switches, integrated access devices (IADs), data multiplexers, metropolitan area network (MAN) access devices, wide area network (WAN) access devices. In some cases, edge data networks may include edge devices configured to use machine learning, or use artificial intelligence, or use complex event processing models, or use Internet of Things (IoT) data processing, or run containers, or run virtual machines directly on the edge device, or any combination thereof, to process data offloaded from one or more application clients of a UE.

In some cases, a set of default performance indicators may be customized for a particular application client operating on a UE. In some cases, an edge enabler client of the UE may adjust one or more of the performance indicators to enhance performance of the application client, while maintaining satisfactory UE performance (e.g., maintaining battery usage below a UE battery drainage rate threshold, maintaining processor load below a processor usage threshold, maintaining UE temperature below a UE temperature threshold, maintaining a temperature of a component of the UE below a component temperature threshold, maintaining memory load below a memory usage threshold, etc.). In some cases, the UE or edge enabler client may monitor execution of the application client to observe empirical data (e.g., memory usage, battery drain rate, processor load, etc.), and may generate a UE modified performance profile for the application client based on identifying UE performance patterns from the empirical data. In some cases, the UE may use the performance profile to adjust one or more default performance indicators of a UE performance provide to generate a UE modified performance profile that enhances execution of the application client by the UE (e.g., adjust at least one of the UE battery drainage rate threshold, or the processor usage threshold, or the UE temperature threshold, or the component temperature threshold, or the memory usage threshold, or any combination thereof).

Particular aspects of the subject matter described herein may be implemented to realize one or more advantages. The present techniques provide architectures and mechanisms that enable application client performance constraints being communicated to the edge enabler client and enables the UE and/or the edge enabler client to make adjustments to the processing of application data based on a performance profile and/or empirical data (e.g., operating conditions of the UE, operating conditions of a network associated with the UE, environmental conditions of the UE or associated network). As such, supported techniques may enable a UE to provide edge services to a legacy application client that is not programmed or configured to use edge services. Additionally, supported techniques may include improved network operations and, in some examples, may promote network efficiencies, among other benefits.

Aspects of the disclosure are initially described in the context of a wireless communications system. Aspects of the disclosure are also illustrated by and described with reference to another example of a wireless communications system and a system diagram. Aspects of the disclosure are further illustrated by and described with reference to apparatus diagrams, system diagrams, and flowcharts that relate to application client performance indicator management.

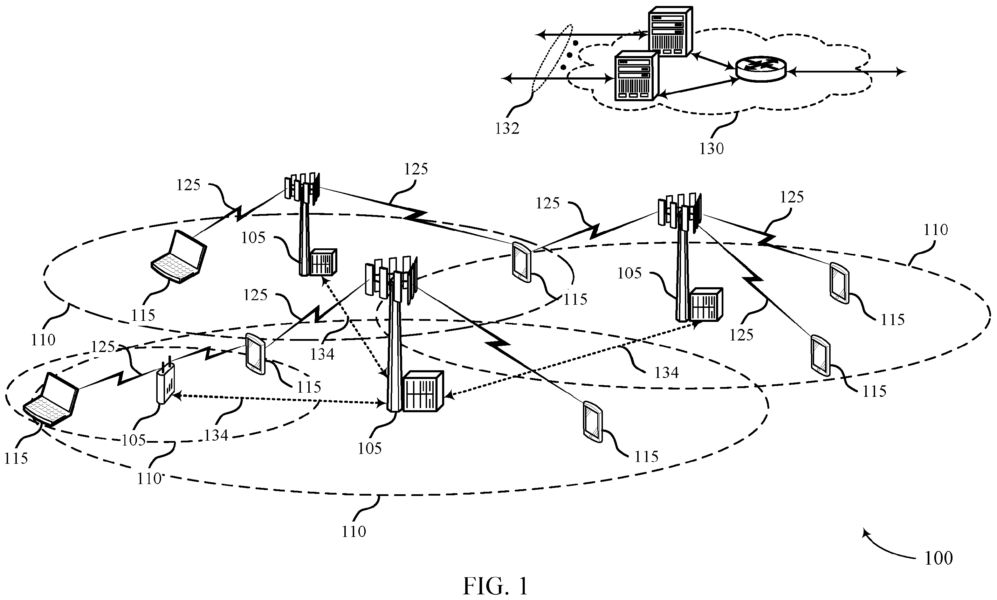

**FIG. 1** illustrates an example of a wireless communications system 100 that supports application client performance indicator management in accordance with aspects of the present disclosure. The wireless communications system 100 includes base stations 105, UEs 115, and a core network 130. In some examples, the wireless communications system 100 may be a Long Term Evolution (LTE) network, an LTE-Advanced (LTE-A) network, an LTE-A Pro network, or a New Radio (NR) network. In some cases, wireless communications system 100 may support enhanced broadband communications, ultra-reliable (e.g., mission critical) communications, low latency communications, or communications with low-cost and low-complexity devices.

Base stations 105 may wirelessly communicate with UEs 115 via one or more base station antennas. Base stations 105 described herein may include or may be referred to by those skilled in the art as a base transceiver station, a radio base station, an access point, a radio transceiver, a NodeB, an eNodeB (eNB), a next-generation NodeB or giga-NodeB (either of which may be referred to as a gNB), a Home NodeB, a Home eNodeB, or some other suitable terminology. Wireless communications system 100 may include base stations 105 of different types (e.g., macro or small cell base stations). The UEs 115 described herein may be able to communicate with various types of base stations 105 and network equipment including macro eNBs, small cell eNBs, gNBs, relay base stations, and the like.

Each base station 105 may be associated with a particular geographic coverage area 110 in which communications with various UEs 115 is supported. Each base station 105 may provide communication coverage for a respective geographic coverage area 110 via communication links 125, and communication links 125 between a base station 105 and a UE 115 may utilize one or more carriers. Communication links 125 shown in wireless communications system 100 may include uplink transmissions from a UE 115 to a base station 105, or downlink transmissions from a base station 105 to a UE 115. Downlink transmissions may also be called forward link transmissions while uplink transmissions may also be called reverse link transmissions.

The geographic coverage area 110 for a base station 105 may be divided into sectors making up a portion of the geographic coverage area 110, and each sector may be associated with a cell. For example, each base station 105 may provide communication coverage for a macro cell, a small cell, a hot spot, or other types of cells, or various combinations thereof. In some examples, a base station 105 may be movable and therefore provide communication coverage for a moving geographic coverage area 110. In some examples, different geographic coverage areas 110 associated with different technologies may overlap, and overlapping geographic coverage areas 110 associated with different technologies may be supported by the same base station 105 or by different base stations 105. The wireless communications system 100 may include, for example, a heterogeneous LTE/LTE-A/LTE-A Pro or NR network in which different types of base stations 105 provide coverage for various geographic coverage areas 110.

The term "cell" refers to a logical communication entity used for communication with a base station 105 (e.g., over a carrier), and may be associated with an identifier for distinguishing neighboring cells (e.g., a physical cell identifier (PCID), a virtual cell identifier (VCID)) operating via the same or a different carrier. In some examples, a carrier may support multiple cells, and different cells may be configured according to different protocol types (e.g., machine-type communication (MTC), narrowband Internet-of-Things (NB-IoT), enhanced mobile broadband (eMBB), or others) that may provide access for different types of devices. In some cases, the term "cell" may refer to a portion of a geographic coverage area 110 (e.g., a sector) over which the logical entity operates.

UEs 115 may be dispersed throughout the wireless communications system 100, and each UE 115 may be stationary or mobile. A UE 115 may also be referred to as a mobile device, a wireless device, a remote device, a handheld device, or a subscriber device, or some other suitable terminology, where the "device" may also be referred to as a unit, a station, a terminal, or a client. A UE 115 may also be a personal electronic device such as a cellular phone, a personal digital assistant (PDA), a tablet computer, a laptop computer, or a personal computer. In some examples, a UE 115 may also refer to a wireless local loop (WLL) station, an Internet of Things (IoT) device, an Internet of Everything (IoE) device, or an MTC device, or the like, which may be implemented in various articles such as appliances, vehicles, meters, or the like.

Some UEs 115, such as MTC or IoT devices, may be low cost or low complexity devices, and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for UEs 115 include entering a power saving "deep sleep" mode when not engaging in active communications, or operating over a limited bandwidth (e.g., according to narrowband communications). In some cases, UEs 115 may be designed to support critical functions (e.g., mission critical functions), and a wireless communications system 100 may be configured to provide ultra-reliable communications for these functions.

In some cases, a UE 115 may also be able to communicate directly with other UEs 115 (e.g., using a peer-to-peer (P2P) or device-to-device (D2D) protocol). One or more of a group of UEs 115 utilizing D2D communications may be within the geographic coverage area 110 of a base station 105. Other UEs 115 in such a group may be outside the geographic coverage area 110 of a base station 105, or be otherwise unable to receive transmissions from a base station 105. In some cases, groups of UEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out between UEs 115 without the involvement of a base station 105.

Base stations 105 may communicate with the core network 130 and with one another. For example, base stations 105 may interface with the core network 130 through backhaul links 132 (e.g., via an S1, N2, N3, or other interface). Base stations 105 may communicate with one another over backhaul links 134 (e.g., via an X2, Xn, or other interface) either directly (e.g., directly between base stations 105) or indirectly (e.g., via core network 130).

The core network 130 may provide user authentication, access authorization, tracking, Internet Protocol (IP) connectivity, and other access, routing, or mobility functions. The core network 130 may be an evolved packet core (EPC), which may include at least one mobility management entity (MME), at least one serving gateway (S-GW), and at least one Packet Data Network (PDN) gateway (P-GW). The MME may manage non-access stratum (e.g., control plane) functions such as mobility, authentication, and bearer management for UEs 115 served by base stations 105 associated with the EPC. User IP packets may be transferred through the S-GW, which itself may be connected to the P-GW. The P-GW may provide IP address allocation as well as other functions. The P-GW may be connected to the network operators IP services. The operators IP services may include access to the Internet, Intranet(s), an IP Multimedia Subsystem (IMS), or a Packet-Switched (PS) Streaming Service.

At least some of the network devices, such as a base station 105, may include subcomponents such as an access network entity, which may be an example of an access node controller (ANC). Each access network entity may communicate with UEs 115 through a number of other access network transmission entities, which may be referred to as a radio head, a smart radio head, or a transmission/reception point (TRP). In some configurations, various functions of each access network entity or base station 105 may be distributed across various network devices (e.g., radio heads and access network controllers) or consolidated into a single network device (e.g., a base station 105).

Wireless communications system 100 may operate using one or more frequency bands (e.g., in the range of 300 megahertz (MHz) to 300 gigahertz (GHz)). Generally, the region from 300 MHz to 3 GHz is known as the ultra-high frequency (UHF) region or decimeter band, since the wavelengths range from approximately one decimeter to one meter in length. UHF waves may be blocked or redirected by buildings and environmental features. However, the waves may penetrate structures sufficiently for a macro cell to provide service to UEs 115 located indoors. Transmission of UHF waves may be associated with smaller antennas and shorter range (e.g., less than 100 km) compared to transmission using the smaller frequencies and longer waves of the high frequency (HF) or very high frequency (VHF) portion of the spectrum below 300 MHz.

Wireless communications system 100 may also operate in a super high frequency (SHF) region using frequency bands from 3 GHz to 30 GHz, also known as the centimeter band. The SHF region includes bands such as the 5 GHz industrial, scientific, and medical (ISM) bands, which may be used opportunistically by devices that may be capable of tolerating interference from other users.

Wireless communications system 100 may also operate in an extremely high frequency (EHF) region of the spectrum (e.g., from 30 GHz to 300 GHz), also known as the millimeter band. In some examples, wireless communications system 100 may support millimeter wave (mmW) communications between UEs 115 and base stations 105, and EHF antennas of the respective devices may be even smaller and more closely spaced than UHF antennas. In some cases, this may facilitate use of antenna arrays within a UE 115. However, the propagation of EHF transmissions may be subject to even greater atmospheric attenuation and shorter range than SHF or UHF transmissions. Techniques disclosed herein may be employed across transmissions that use one or more different frequency regions, and designated use of bands across these frequency regions may differ by country or regulating body.

In some cases, wireless communications system 100 may utilize both licensed and unlicensed radio frequency spectrum bands. For example, wireless communications system 100 may employ License Assisted Access (LAA), LTE-Unlicensed (LTE-U) radio access technology, or NR technology in an unlicensed band such as the 5 GHz ISM band. When operating in unlicensed radio frequency spectrum bands, wireless devices such as base stations 105 and UEs 115 may employ listen-before-talk (LBT) procedures to ensure a frequency channel is clear before transmitting data. In some cases, operations in unlicensed bands may be based on a carrier aggregation configuration in conjunction with component carriers operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

In some examples, base station 105 or UE 115 may be equipped with multiple antennas, which may be used to employ techniques such as transmit diversity, receive diversity, multiple-input multiple-output (MIMO) communications, or beamforming. For example, wireless communications system 100 may use a transmission scheme between a transmitting device (e.g., a base station 105) and a receiving device (e.g., a UE 115), where the transmitting device is equipped with multiple antennas and the receiving device is equipped with one or more antennas. MIMO communications may employ multipath signal propagation to increase the spectral efficiency by transmitting or receiving multiple signals via different spatial layers, which may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream, and may carry bits associated with the same data stream (e.g., the same codeword) or different data streams. Different spatial layers may be associated with different antenna ports used for channel measurement and reporting. MIMO techniques include single-user MIMO (SU-MIMO) where multiple spatial layers are transmitted to the same receiving device, and multiple-user MIMO (MU-MIMO) where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105 or a UE 115) to shape or steer an antenna beam (e.g., a transmit beam or receive beam) along a spatial path between the transmitting device and the receiving device. Beamforming may be achieved by combining the signals communicated via antenna elements of an antenna array such that signals propagating at particular orientations with respect to an antenna array experience constructive interference while others experience destructive interference. The adjustment of signals communicated via the antenna elements may include a transmitting device or a receiving device applying some amplitude and phase offsets to signals carried via each of the antenna elements associated with the device. The adjustments associated with each of the antenna elements may be defined by a beamforming weight set associated with a particular orientation (e.g., with respect to the antenna array of the transmitting device or receiving device, or with respect to some other orientation).

In one example, a base station 105 may use multiple antennas or antenna arrays to conduct beamforming operations for directional communications with a UE 115. For instance, some signals (e.g. synchronization signals, reference signals, beam selection signals, or other control signals) may be transmitted by a base station 105 multiple times in different directions, which may include a signal being transmitted according to different beamforming weight sets associated with different directions of transmission. Transmissions in different beam directions may be used to identify (e.g., by the base station 105 or a receiving device, such as a UE 115) a beam direction for subsequent transmission and/or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based at least in in part on a signal that was transmitted in different beam directions. For example, a UE 115 may receive one or more of the signals transmitted by the base station 105 in different directions, and the UE 115 may report to the base station 105 an indication of the signal it received with a highest signal quality, or an otherwise acceptable signal quality. Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115), or transmitting a signal in a single direction (e.g., for transmitting data to a receiving device).

A receiving device (e.g., a UE 115, which may be an example of a mmW receiving device) may try multiple receive beams when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets applied to signals received at a plurality of antenna elements of an antenna array, or by processing received signals according to different receive beamforming weight sets applied to signals received at a plurality of antenna elements of an antenna array, any of which may be referred to as "listening" according to different receive beams or receive directions. In some examples, a receiving device may use a single receive beam to receive along a single beam direction (e.g., when receiving a data signal). The single receive beam may be aligned in a beam direction determined based at least in part on listening according to different receive beam directions (e.g., a beam direction determined to have a highest signal strength, highest signal-to-noise ratio, or otherwise acceptable signal quality based at least in part on listening according to multiple beam directions).

In some cases, the antennas of a base station 105 or UE 115 may be located within one or more antenna arrays, which may support MIMO operations, or transmit or receive beamforming. For example, one or more base station antennas or antenna arrays may be co-located at an antenna assembly, such as an antenna tower. In some cases, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations.

In some cases, wireless communications system 100 may be a packet-based network that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) to provide retransmission at the MAC layer to improve link efficiency. In the control plane, the Radio Resource Control (RRC) protocol layer may provide establishment, configuration, and maintenance of an RRC connection between a UE 115 and a base station 105 or core network 130 supporting radio bearers for user plane data. At the Physical layer, transport channels may be mapped to physical channels.

In some cases, UEs 115 and base stations 105 may support retransmissions of data to increase the likelihood that data is received successfully. HARQ feedback is one technique of increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., signal-to-noise conditions). In some cases, a wireless device may support same-slot HARQ feedback, where the device may provide HARQ feedback in a specific slot for data received in a previous symbol in the slot. In other cases, the device may provide HARQ feedback in a subsequent slot, or according to some other time interval.

Time intervals in LTE or NR may be expressed in multiples of a basic time unit, which may, for example, refer to a sampling period of Tₛ = 1/30,720,000 seconds. Time intervals of a communications resource may be organized according to radio frames each having a duration of 10 milliseconds (ms), where the frame period may be expressed as T_{f} = 307,200 Tₛ. The radio frames may be identified by a system frame number (SFN) ranging from 0 to 1023. Each frame may include 10 subframes numbered from 0 to 9, and each subframe may have a duration of 1 ms. A subframe may be further divided into 2 slots each having a duration of 0.5 ms, and each slot may contain 6 or 7 modulation symbol periods (e.g., depending on the length of the cyclic prefix prepended to each symbol period). Excluding the cyclic prefix, each symbol period may contain 2048 sampling periods. In some cases, a subframe may be the smallest scheduling unit of the wireless communications system 100, and may be referred to as a transmission time interval (TTI). In other cases, a smallest scheduling unit of the wireless communications system 100 may be shorter than a subframe or may be dynamically selected (e.g., in bursts of shortened TTIs (sTTIs) or in selected component carriers using sTTIs).

In some wireless communications systems, a slot may further be divided into multiple mini-slots containing one or more symbols. In some instances, a symbol of a mini-slot or a mini-slot may be the smallest unit of scheduling. Each symbol may vary in duration depending on the subcarrier spacing or frequency band of operation, for example. Further, some wireless communications systems may implement slot aggregation in which multiple slots or mini-slots are aggregated together and used for communication between a UE 115 and a base station 105.

The term "carrier" refers to a set of radio frequency spectrum resources having a defined physical layer structure for supporting communications over a communication link 125. For example, a carrier of a communication link 125 may include a portion of a radio frequency spectrum band that is operated according to physical layer channels for a given radio access technology. Each physical layer channel may carry user data, control information, or other signaling. A carrier may be associated with a pre-defined frequency channel (e.g., an evolved universal mobile telecommunication system terrestrial radio access (E-UTRA) absolute radio frequency channel number (EARFCN)), and may be positioned according to a channel raster for discovery by UEs 115. Carriers may be downlink or uplink (e.g., in an FDD mode), or be configured to carry downlink and uplink communications (e.g., in a TDD mode). In some examples, signal waveforms transmitted over a carrier may be made up of multiple sub-carriers (e.g., using multi-carrier modulation (MCM) techniques such as orthogonal frequency division multiplexing (OFDM) or discrete Fourier transform spread OFDM (DFT-S-OFDM)).

The organizational structure of the carriers may be different for different radio access technologies (e.g., LTE, LTE-A, LTE-A Pro, NR). For example, communications over a carrier may be organized according to TTIs or slots, each of which may include user data as well as control information or signaling to support decoding the user data. A carrier may also include dedicated acquisition signaling (e.g., synchronization signals or system information, etc.) and control signaling that coordinates operation for the carrier. In some examples (e.g., in a carrier aggregation configuration), a carrier may also have acquisition signaling or control signaling that coordinates operations for other carriers.

Physical channels may be multiplexed on a carrier according to various techniques. A physical control channel and a physical data channel may be multiplexed on a downlink carrier, for example, using time division multiplexing (TDM) techniques, frequency division multiplexing (FDM) techniques, or hybrid TDM-FDM techniques. In some examples, control information transmitted in a physical control channel may be distributed between different control regions in a cascaded manner (e.g., between a common control region or common search space and one or more UE-specific control regions or UE-specific search spaces).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of predetermined bandwidths for carriers of a particular radio access technology (e.g., 1.4, 3, 5, 10, 15, 20, 40, or 80 MHz). In some examples, each served UE 115 may be configured for operating over portions or all of the carrier bandwidth. In other examples, some UEs 115 may be configured for operation using a narrowband protocol type that is associated with a predefined portion or range (e.g., set of subcarriers or RBs) within a carrier (e.g., "in-band" deployment of a narrowband protocol type).

In a system employing MCM techniques, a resource element may include one symbol period (e.g., a duration of one modulation symbol) and one subcarrier, where the symbol period and subcarrier spacing are inversely related. The number of bits carried by each resource element may depend on the modulation scheme (e.g., the order of the modulation scheme). Thus, the more resource elements that a UE 115 receives and the higher the order of the modulation scheme, the higher the data rate may be for the UE 115. In MIMO systems, a wireless communications resource may refer to a combination of a radio frequency spectrum resource, a time resource, and a spatial resource (e.g., spatial layers), and the use of multiple spatial layers may further increase the data rate for communications with a UE 115.

Devices of the wireless communications system 100 (e.g., base stations 105 or UEs 115) may have a hardware configuration that supports communications over a particular carrier bandwidth, or may be configurable to support communications over one of a set of carrier bandwidths. In some examples, the wireless communications system 100 may include base stations 105 and/or UEs 115 that support simultaneous communications via carriers associated with more than one different carrier bandwidth.

Wireless communications system 100 may support communication with a UE 115 on multiple cells or carriers, a feature which may be referred to as carrier aggregation or multi-carrier operation. A UE 115 may be configured with multiple downlink component carriers and one or more uplink component carriers according to a carrier aggregation configuration. Carrier aggregation may be used with both FDD and TDD component carriers.

In some cases, wireless communications system 100 may utilize enhanced component carriers (eCCs). An eCC may be characterized by one or more features including wider carrier or frequency channel bandwidth, shorter symbol duration, shorter TTI duration, or modified control channel configuration. In some cases, an eCC may be associated with a carrier aggregation configuration or a dual connectivity configuration (e.g., when multiple serving cells have a suboptimal or non-ideal backhaul link). An eCC may also be configured for use in unlicensed spectrum or shared spectrum (e.g., where more than one operator is allowed to use the spectrum). An eCC characterized by wide carrier bandwidth may include one or more segments that may be utilized by UEs 115 that are not capable of monitoring the whole carrier bandwidth or are otherwise configured to use a limited carrier bandwidth (e.g., to conserve power).

In some cases, an eCC may utilize a different symbol duration than other component carriers, which may include use of a reduced symbol duration as compared with symbol durations of the other component carriers. A shorter symbol duration may be associated with increased spacing between adjacent subcarriers. A device, such as a UE 115 or base station 105, utilizing eCCs may transmit wideband signals (e.g., according to frequency channel or carrier bandwidths of 20, 40, 60, 80 MHz, etc.) at reduced symbol durations (e.g., 16.67 microseconds). A TTI in eCC may include one or multiple symbol periods. In some cases, the TTI duration (that is, the number of symbol periods in a TTI) may be variable.

Wireless communications system 100 may be an NR system that may utilize any combination of licensed, shared, and unlicensed spectrum bands, among others. The flexibility of eCC symbol duration and subcarrier spacing may allow for the use of eCC across multiple spectrums. In some examples, NR shared spectrum may increase spectrum utilization and spectral efficiency, specifically through dynamic vertical (e.g., across the frequency domain) and horizontal (e.g., across the time domain) sharing of resources.

In some cases, wireless communications system 100 may include an edge data network. In some cases, the edge data network may include one or more edge devices such as an edge enabler client (EEC)), or an edge configuration server (ECS), or an edge enabler server (EES), or any combination thereof. Some advantages an edge data network may include providing edge services to legacy application clients, decreased device and system latency, and improved user experience.

In some cases, a UE 115 may transmit an indication of an adjustment to one or more performance indicators for an application client operating on the UE 115. Some advantages to the UE 115 of transmitting an indication of an adjustment to one or more performance indicators for an application client operating on the UE 115 may include providing edge services to legacy application clients, decreased device and system latency, and improved user experience.

In some cases, the UE 115 may transmit the indication of the adjustment to an edge data network via a wireless network (e.g., a cellular network of wireless communications system 100 such as an LTE network, or an NR network, etc.). Some advantages to the UE 115 of transmitting the indication of the adjustment to an edge data network via a wireless network may include providing edge services to legacy application clients, decreased device and system latency, and improved user experience.

In some cases, the one or more performance indicators may be based on a UE modified performance profile for the application client (e.g., modifications to a UE performance profile, using a UE performance profile to modify or formulate one or more modifications to one or more performance indicators of the UE performance profile). Some advantages to the UE 115 of basing the one or more performance indicators on a UE modified performance profile for the application client may include providing edge services to legacy application clients, decreased device and system latency, and improved user experience.

In some cases, UE 115 may communicate application data traffic with the edge data network via the wireless network in accordance with the one or more adjusted performance indicators. Some advantages to the UE 115 of communicating application data traffic with the edge data network via the wireless network in accordance with the one or more adjusted performance indicators may include providing edge services to legacy application clients, decreased device and system latency, and improved user experience.

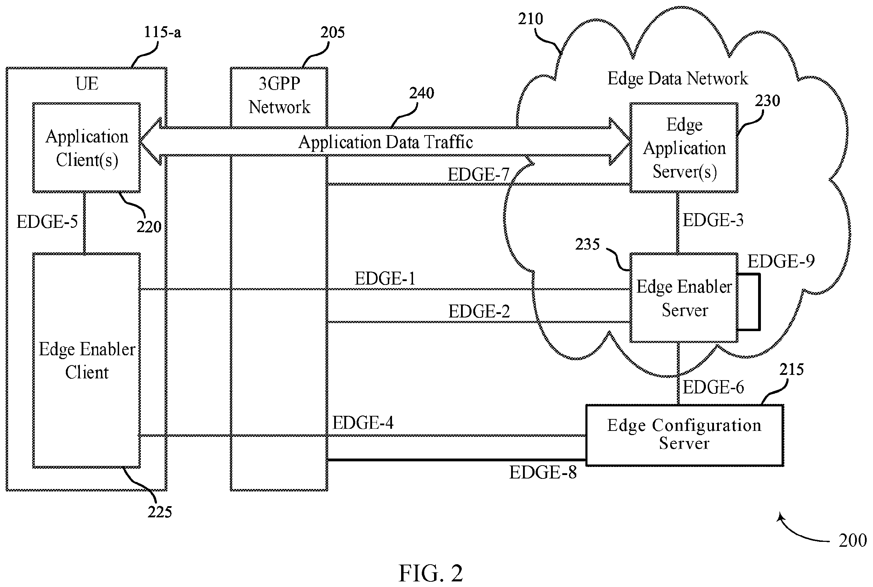

**FIG. 2** illustrates an example of a wireless communications system 200 that supports application client performance indicator management in accordance with aspects of the present disclosure. In some examples, wireless communications system 200 may implement aspects of wireless communications system 100.

In some cases, wireless communications system 200 may include UE 115-a, 3GPP network 205, edge data network 210, and edge configuration server (ECS) 215 (e.g., an edge configuration server). UE 115-a may be an example of a UE 115 from FIG. 1. As shown, UE 115-a may include application client 220 and edge enable client (EEC) 225. In some examples, EEC 225 may include firmware or software, or both, executing on the UE 115-a that is configured to monitor one or more aspects of the application client 220 (e.g., refresh rate, frame rate, radio resources allocated to application client 220, memory allocated to application client 220, processor resources allocated to application client 220, etc.) or monitor one or more aspects of UE 115-a (e.g., processor frequency rate, processor load, memory allocations, radio resource allocations, temperature of UE 115-a or a component of UE 115-a, battery level, battery usage rate, etc.), or monitor one or more aspects of application client 220 and UE 115-a, and to communicate with the edge data network 210 via the 3GPP network 205. In some cases, application client 220 may be one of multiple application clients installed and/or executing on UE 115-a. In the illustrated example, edge data network 210 may include edge application server 230 and edge enabler server (EES) 235. In some cases, communication link 240 may be established between UE 115-a and edge data network 210. As shown, communication link 240 may be established between application client 220 and edge application server 230. Examples of edge devices may include any device of edge data network 210 such as edge application server 230, EES 235, ECS 215, etc. In some cases, edge devices may include machine learning and complex event processing models that the edge devices use to process data offloaded by UE 115-a onto the edge data network 210.

Although ECS 215 is depicted as being outside of edge data network 210, in some cases edge data network 210 includes ECS 215. Reference to operations of edge data network 210 may include operations performed by at least one of edge application server 230, or EES 235, or ECS 215, or any combination thereof.

In some examples, edge application server 230 may be one of multiple edge application servers in edge data network 210. In some examples, 3GPP network 205 may be an example of wireless communications system 100 of FIG. 1. In some examples, edge data network 210 may provide connectivity to one or more core networks such as core network 130 of FIG. 1, or a different core network, or a core network provided by 3GPP network 205 (e.g., such as core network 130 of FIG. 1), or any combination thereof.

In some cases, edge data network 210 may include one or more edge devices. In the illustrated example, wireless communications system 200 may include one or more interfaces of edge data network 210. In one example, wireless communications system 200 may include at least one of EDGE-1 that interfaces EEC 225 with EES 235; or EDGE-2 that interfaces 3GPP network 205 with EES 235; or EDGE-3 that interfaces edge application server 230 with EES 235; or EDGE-4 that interfaces EEC 225 with ECS 215; or EDGE-5 that interfaces EEC 225 with application client 220; or EDGE-6 that interfaces EES 235 with ECS 215; or EDGE-7 that interfaces 3GPP network 205 with edge application server 230; or EDGE-8 that interfaces ECS 215 with 3GPP network 205; or EDGE-9 that interfaces EES 235 with itself; or any combination thereof. At least one of EDGE-1, or EDGE-2, or EDGE-3, or EDGE-4, or EDGE-5, or EDGE-6, or EDGE-7, or EDGE-8, or EDGE-9, or any combination thereof, may include or operate in conjunction with one or more application program interfaces (APIs).

In some cases, application client 220 of UE 115-a may not be aware of edge services available from edge data network 210, which may result in a reduced quality of service (e.g., a quality of service below a threshold) or a relatively poor user experience (e.g., lag, relatively high latency, processes freezing up, etc.). For example, when application client 220 is not aware of edge services, application client 220 may lack the ability to offload processing to edge data network 210, which may result in a poor user experience due to, for example, high processing utilization and/or high battery drain at the UE 115. Thus, in some cases EEC 225 of the UE 115-a, or may be configured with detection mechanisms to enable EEC 225 to adjust the performance constraints of UE 115-a that is executing application client 220.

In some cases, EES 235 may download default key performance indicators (KPIs) for a particular application client. The default KPIs may include radio resource KPIs (e.g., bandwidth, data rate, latency, etc.), processor KPIs (e.g., maximum processor load, maximum processor frequency rate), memory KPIs (e.g., maximum memory allocation), etc. In some cases, EEC 225 may generate and maintain a performance profile for application client 220 based on the default KPIs for application client 220. Being aware of the performance constraints of application client 220, EEC 225 may enable, or disable, or adjust resources of UE 115-a, or edge data network 210, or 3GPP network 205, or any combination thereof, to enhance UE performance and/or the user experience. In some cases, being aware of the performance constraints of application client 220 EES 235 or ECS 215, or both, may enable, or disable, or adjust resources of UE 115-a, or edge data network 210, or ECS 215, or 3GPP network 205, or any combination thereof.

In one example, EES 235 may download (e.g., from the Internet or a cloud network) default KPIs for application client 220. Additionally or alternatively, ECS 215 may download default KPIs for application client 220. In some cases, ECS 215 may transmit over EDGE-6 the default KPIs of application client 220 to EES 235. Similarly, EES 235 may transmit over EDGE-6 the KPIs of application client 220 to ECS 215. In some cases, EEC 225 may receive over EDGE-5 KPIs from application client 220, and EEC 225 may forward the received KPIs to EES 235 over EDGE-1 and/or to ECS 215 over EDGE-4.

In one example, EDGE-1 or EDGE-4, or both, may be configured to communicate key performance indicators (KPIs). For example, EES 235 may identify a configuration for application client 220 when EEC 225 indicates to EES 235 over EDGE-1 that application client 220 is executing on UE 115-a, and EES 235 may transmit over EDGE-1 the default KPIs of application client 220 to EEC 225. In some examples, the EEC 225 may obtain the default KPIs from the application client 220. Additionally or alternatively, ECS 215 may identify a configuration for application client 220 when EEC 225 indicates to ECS 215 over EDGE-4 that application client 220 is executing on UE 115-a, and ECS 215 may transmit over EDGE-4 the default KPIs of application client 220 to EEC 225.

As one example, application client 220 may be a gaming application with program constraints. In some cases, EEC 225 may determine that application client 220 is not edge-capable or edge-aware. For example, application client 220 may be an older version that is not configured to use the edges services of edge data network 210. Accordingly, in one example, when EEC 225 detect UE 115-a executing application client 220, EEC 225 may notify edge data network 210 (e.g., via EDGE-1 or EDGE-4, or both) that UE 115-a is executing application client 220. In some cases, EEC 25 may transmit a message to EES 235 over EDGE-1 to request edge services on behalf of application client 220.

In some examples, EEC 225 may adjust one or more parameters of the default KPIs for application client 220. In one example, EEC 225 may monitor a performance of UE 115-a when UE 115-a is executing application client 220 to determine how to adjust the one or more parameters of the default KPIs for application client 220.

As one example, the default KPI may specify (or application client 220 may request via EDGE-5) a data rate of 1 gigabit/second (Gbps). However, EEC 225 may determine that providing a data rate of 1 Gbps for application client 220 would exceed a battery usage threshold for the UE 115-a. Accordingly, EEC 225 may adjust the data rate KPI to 500 megabits/second (Mbps) and send the updated data rate KPI to EES 235 over EDGE-1 and/or to ECS 215 over EDGE-4. In some cases EEC 225 may request from EES 235 that a data rate of 500 Mbps be provided to application client 220. In some cases, EEC 225 may update or modify the performance profile of application client 220 to indicate a date rate of 500 Mbps for the data rate KPI. In some cases, EES 235 may transmit over EDGE-3 the data rate request to the edge application server 230. The edge application server 230 may then provide the requested data rate to application client 220 over communication link 240.

In some cases, EEC 225 may be configured to monitor (e.g., via EDGE-5) empirical data of application client 220 over one or more time periods. In some cases, monitoring empirical data may include EEC 225 monitoring performance constraints of application client 220. For example, EEC 225 may communicate with a high-level operating system (HLOS) associated with UE 115-a to identify performance constraints of application client 220. Examples of empirical data may include processor loads, processor frequency rates, memory usage, disk usage, temperature of UE 115-a, temperature of components of UE 115-a, radio resource usage, bandwidth usage, latency, etc. In one example, EEC 225 may monitor the empirical data and analyze the empirical data based on one or more predetermined thresholds (e.g., comparing processor empirical data to a processor usage threshold, comparing radio resource empirical data to a radio resource threshold, comparing memory empirical data to a memory usage threshold, comparing battery level and/or battery usage rate empirical data to a battery usage threshold, comparing temperature empirical data to a temperature threshold, etc.).

In some cases, EEC 225 may generate and maintain a performance profile for application client 220 based on an analysis of the empirical data to provide an accurate representation of a real-time performance constraint of application client 220. In some cases, the performance profile may include a configuration of resources from at least one of UE 115-a, or edge data network 210, or 3GPP network 205, or any combination thereof.

The performance profile may specify what resources application client 220 is allowed to use (e.g., resources of UE 115-a, resources of edge data network 210, resources of 3GPP network 205, etc.) and how those resources are configured. For example, the performance profile may specify at least one of a refresh rate, or a frame rate, or radio resources (e.g., bandwidth, data rate, latency, etc.), or a configuration of the radio resources, or a maximum central processor frequency rate, or a maximum graphical processor frequency rate, or a maximum memory allocation, a temperature range of UE 115-a within which application client 220 is allowed to execute or continue executing, a battery level of UE 115-a above which application client 220 is allowed to execute or continue executing, or any combination thereof.

In one example, UE 115-a may execute application client 220 in accordance with the performance profile. In some cases, the EEC 225 may monitor a performance of UE 115-a while UE 115-a executes application client. In some cases, EEC 225 may determine that operation of application client 220 is adversely affecting a performance of UE 115-a (e.g., battery will be drained in 1 hour, a temperature of UE 115-a is increasing and may result in temperatures hot enough to cause a burn unless the performance parameters of UE 115-a are adjusted, etc.).

In one example, based on the analysis EEC 225 may determine that based on a current configuration application client 220 is adversely affecting a performance of UE 115-a. In one example, EEC 225 may determine that executing application client 220 under current conditions and configuration is adversely affecting UE 115-a (e.g., overloading a processor of UE 115-a, overheating UE 115-a, draining a battery of UE 115-a too quickly, etc.).

In some examples, EEC 225 may adjust a configuration associated with application client 220 (e.g., adjust one or more performance indicators) based on the adverse performance of UE 115-a. For example, EEC 225 may instruct UE 115-a (e.g., via EDGE-5) to adjust (e.g., increase or decrease) at least one of the refresh rate, or the frame rate, or central processor frequency rate, or the graphical processor frequency rate, or the memory allocation based on the analysis of the monitored empirical data indicating current operation of application client 220 is adversely affecting performance of UE 115-a. In other examples, EEC 225 may instruct edge data network (e.g., via EDGE-1 or EDGE-4) to modify (e.g., increase or decrease) a configuration of the radio resources (e.g., bandwidth, data rate, latency, etc.) provided by edge data network 210 and/or 3GPP network 205.

In some examples, the EEC 225 may instruct (e.g., via EDGE-5) application client 220 to offload at least a portion of the processing of application data for application client 220 onto the edge data network 210 based on the analysis of the monitored performance of UE 115-a. For example, the EEC 225 may instruct application client 220 to send some of the data processing of application data for application client 220 to edge data network 210. As one example, EEC 225 may instruct UE 115-a (e.g., via EDGE-5) to send raw application data of application client 220 to edge data network 210 via communication link 240, enabling edge data network 210 to process the raw application data, and then return the processed application data or a result of processing the raw application data back to UE 115-a via communication link 240. In some cases, EEC 225 may coordinate the offloading the application data processing with edge data network 210 via communications between EEC 225 and EES 235 over EDGE-1, and/or communications between EEC 225 and ECS 215 over EDGE-4.

In some cases, EEC 225 may update or modify the performance profile for application client 220 based on the analysis of the monitored performance of UE 115-a. For example, based on the analysis of the monitored performance of UE 115-a, EEC 225 may determine that resources allocated to application client 220 should be adjusted (e.g., increased, decreased, etc.). For example, EEC 225 may update the performance profile to adjust at least one of an allocation of radio resources for application client 220, or an allocation of processor resources for application client 220, or an allocation of memory resources for application client 220, or a maximum frame rate, or a maximum refresh rate, or a maximum central processor frequency rate, or a maximum graphical processor frequency rate, or any combination thereof. In some cases, EEC 225 may update the performance profile for application client 220 to indicate which processes or what portion of the processes of application client 220 are to be offloaded to edge data network 210 when application client 220 is executing on UE 115-a.

In some cases, EEC 225 may continually adjust the performance profile over time to increase or decrease the level of resources of UE 115-a that are made available to application client 220 based on a current performance of UE 115-a. Similarly, EEC 225 may continually adjust the performance profile to increase or decrease the level of edge services (e.g., the level of resources of edge data network 210, the level of resources of 3GPP network 205) that are made available to application client 220 based on the current operation environment of UE 115-a (e.g., signal to noise conditions between UE 115-a and edge data network 210, signal to noise conditions between UE 115-a and 3GPP network 205).

In some cases, UE 115-a may provide improved performance for multiple application clients including application client 220. For example, UE 115-a may consider available information from multiple application clients when determining how to adjust performance requests for application client 220 while managing current edge service performance across all application client workflows. Accordingly, the present techniques provide UEs such as UE 115-a improved opportunities to enable multiple application clients to take advantage of edge services without requiring the application clients to be enhanced for edge services.

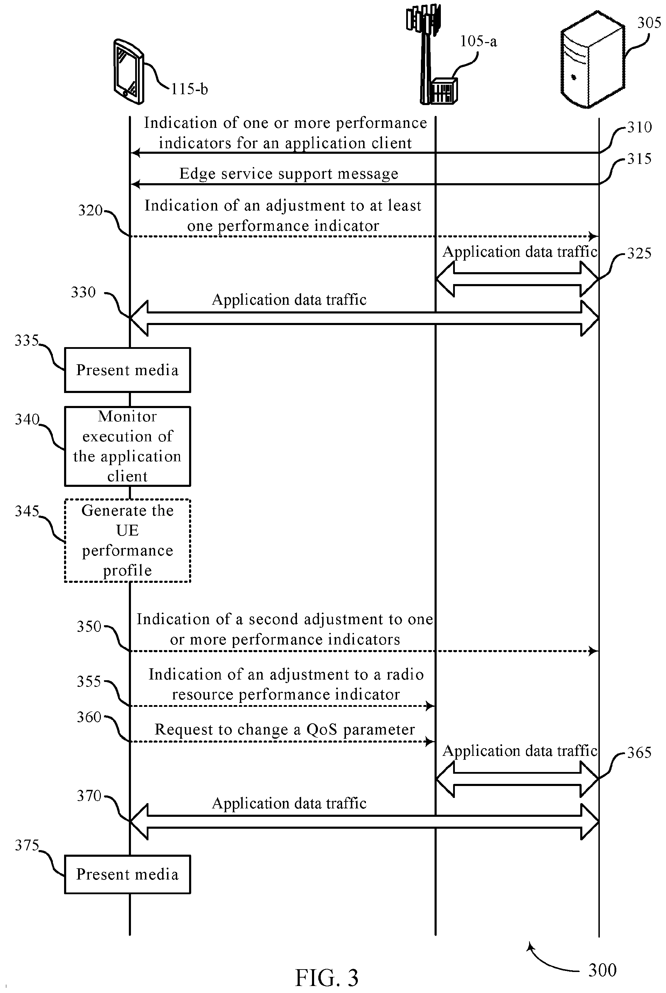

**FIG. 3** illustrates an example of a system diagram 300 that supports application client performance indicator management in accordance with aspects of the present disclosure. In some examples, system diagram 300 may implement aspects of wireless communication system 100.

In some cases, system diagram 300 may include UE 115-b, base station 105-a, and edge device 305. UE 115-b may be an example of a UE from FIG. 1 or FIG. 2. Base station 105-a may be an example of a base station of FIG. 1. In some cases, base station 105-a may provide access to a cellular network (e.g., 3GPP network 205 of FIG. 2). Examples of edge device 305 may include a device from edge data network 210 of FIG. 2 such as edge application server 230, EES 235, ECS 215, etc.

At 310, edge device 305 may transmit to UE 115-b an indication of one or more performance indicators for an application client (e.g., application client 220). In an example, at 310, the edge enabler server 235 may transmit to UE 115-b an indication of the one or more performance indicators for the application client in response to a performance indicator request received from the UE 115-b. In some examples, EEC 225 of the UE 115-b may query the application client 220 to obtain the one or more performance indicators instead of, or in addition to, receiving the one or more performance indicators from edge device 305.

At 315, edge device 305 may transmit an edge service support message to UE 115-b indicating edge service support for the application client. In an example, at 315, the edge enabler server 235 may transmit an edge service support message to UE 115-b via the base station 105-a indicating edge service support for the application client in response to an edge service support inquiry message received from the UE 115-b.

At 320, UE 115-b may optionally transmit an indication of an adjustment to at least one of the performance indicators received at 310. In some cases, UE 115-b may optionally transmit the indication of the adjustment to at least one of the performance indicators received at 310 based on UE 115-b initiating or executing the application client. In one example, UE 115-b may transmit an indication of an adjustment to a radio resource performance indicator based on a UE modified performance profile. In some cases, the application data traffic may be communicated via base station 105-a in accordance with the adjusted radio resource performance indicator. In an example, at 320, the UE 115-b may transmit, via base station 105-a, an indication of an adjustment to at least one of the performance indicators UE 115-b receives at 310 from edge enabler server 235.

At 325, base station 105-a may communicate application data traffic to edge device 305. In some cases, base station 105-a may communicate at least a portion of application data traffic directly to UE 115-b. At 330, edge device 305 may communicate application data traffic to UE 115-b. In an example, at 325, the base station 105-a may communicate application data traffic to edge application server 230, and at 330, the edge application server 230 may communicate application data traffic to UE 115-b. In some examples, edge enabler server 235 may communicate a performance profile for an application client to edge application server 230 via EDGE-3. In some cases, edge application server 230 may communicate the performance profile to base station 105-a via EDGE-7. Accordingly, the base station 105-a may communicate application data traffic to edge application server 230 based on the performance profile, and at 330, the edge application server 230 may communicate application data traffic to UE 115-b based on the performance profile.

At 335, UE 115-b may present media on a display of UE 115-b based on the application data traffic received at 330. For example, UE 115-b may present audio, or video, or three-dimensional (3-D) graphics, or any combination thereof, based at least in part on the application data traffic.

At 340, UE 115-b may monitor execution of the application client on UE 115-b. At 345, UE 115-b may optionally generate the UE modified performance profile based on the monitoring at 340. In some cases, UE 115-b may update the UE modified performance profile at 345 based on the monitoring at 340. In some cases, UE 115-b may monitor execution of the application client to generate empirical data and may generate or update the UE modified performance profile based on the empirical data.

At 350, UE 115-b may optionally transmit an indication of a second adjustment to one or more performance indicators for the application client. In some cases, UE 115-b may analyze the monitored execution of the application client at 340 and update the UE modified performance profile of the application client based on the analysis. In some cases, UE 115-b may compute a second adjustment based on the update to the UE modified performance profile for the application client. In an example, at 350, the UE 115-b may transmit, to edge enabler server 235 via base station 105-a, an indication of a second adjustment to one or more performance indicators for the application client.

At 355, UE 115-b may transmit an indication of a second adjustment may include UE 115-b transmitting to base station 105-a an indication of an adjustment to a radio resource performance indicator.

At 360, UE 115-b may transmit an indication of a second adjustment may include UE 115-b transmitting to base station 105-a an adjustment to a radio resource performance indictor. For example, UE 115-b may request a change to a QoS parameter negotiated between UE 115-b and base station 105-a for an application data session by which the application data traffic is communicated based at least in part on the UE modified performance profile. In some cases, base station 105-a may send an acknowledgement of the change in QoS to UE 115-b. Accordingly, UE 115-b and base station 105-a may communicate in accordance with the changed QoS. In some cases, edge device 305 may prepare and communicate application data traffic for communication via base station 105-a in accordance with the changed QoS. In some cases, base station 105-a may reject the change request or delay implementing the changed QoS.

At 365, base station 105-a may communicate application data traffic with edge device 305. At 370, edge device 305 may communicate application data traffic to UE 115-b (e.g., via base station 105-a). In some cases, the application data traffic of 365 or 370 may be communicated according to the second adjustment indicated at 350, or 355, or 360. In an example, at 365, the base station 105-a may communicate application data traffic to edge application server 230 based on the second adjustment indicated at 350, or 355, or 360. Similarly, at 370, the edge application server 230 may communicate application data traffic to UE 115-b based on the second adjustment indicated at 350, or 355, or 360.

At 375, UE 115-b may present media on a display of UE 115-b based on the application data traffic received at 370.

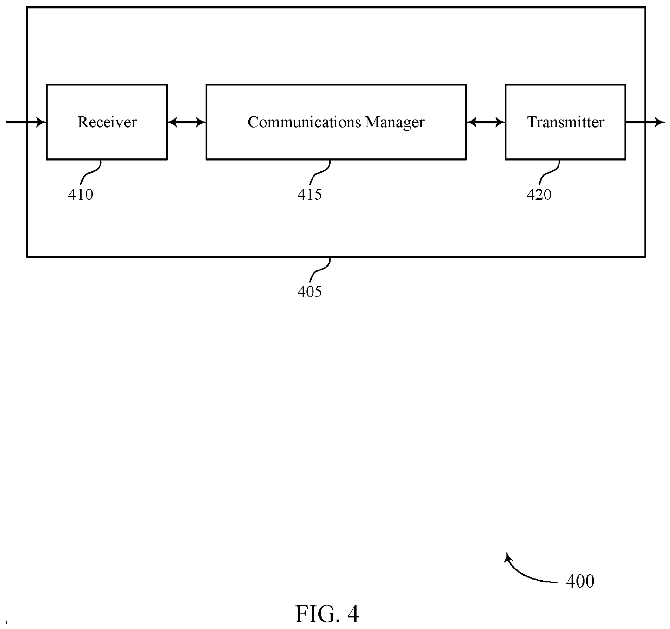

**FIG. 4** shows a diagram 400 of a device 405 that supports application client performance indicator management in accordance with aspects of the present disclosure. The device 405 may be an example of aspects of a UE 115 as described herein. The device 405 may include a receiver 410, a communications manager 415, and a transmitter 420. The device 405 may also include a processor. Each of these components may be in communication with one another (e.g., via one or more buses).

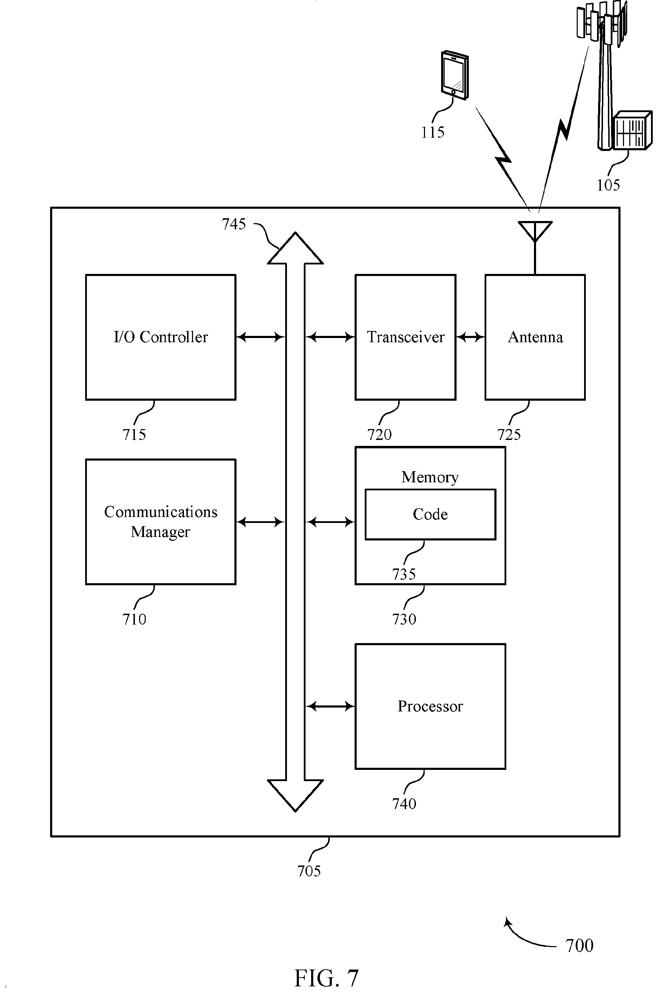

The receiver 410 may receive information such as packets, user data, or control information associated with various information channels (e.g., control channels, data channels, and information related to application client performance indicator management, etc.). Information may be passed on to other components of the device 405. The receiver 410 may be an example of aspects of the transceiver 720 described with reference to FIG. 7. The receiver 410 may utilize a single antenna or a set of antennas.

The communications manager 415 may transmit, to an edge data network via a wireless network, an indication of an adjustment to one or more performance indicators for an application client operating on the UE to receive service from the edge data network based on a UE modified performance profile for the application client and communicate application data traffic with the edge data network via the wireless network in accordance with the one or more adjusted performance indicators. The communications manager 415 may be an example of aspects of the communications manager 710 described herein.

The communications manager 415, or its sub-components, may be implemented in hardware, code (e.g., software or firmware) executed by a processor, or any combination thereof. If implemented in code executed by a processor, the functions of the communications manager 415, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 415, or its sub-components, may be physically located at various positions, including being distributed such that portions of functions are implemented at different physical locations by one or more physical components. In some examples, the communications manager 415, or its sub-components, may be a separate and distinct component in accordance with various aspects of the present disclosure. In some examples, the communications manager 415, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 420 may transmit signals generated by other components of the device 405. In some examples, the transmitter 420 may be collocated with a receiver 410 in a transceiver module. For example, the transmitter 420 may be an example of aspects of the transceiver 720 described with reference to FIG. 7. The transmitter 420 may utilize a single antenna or a set of antennas.

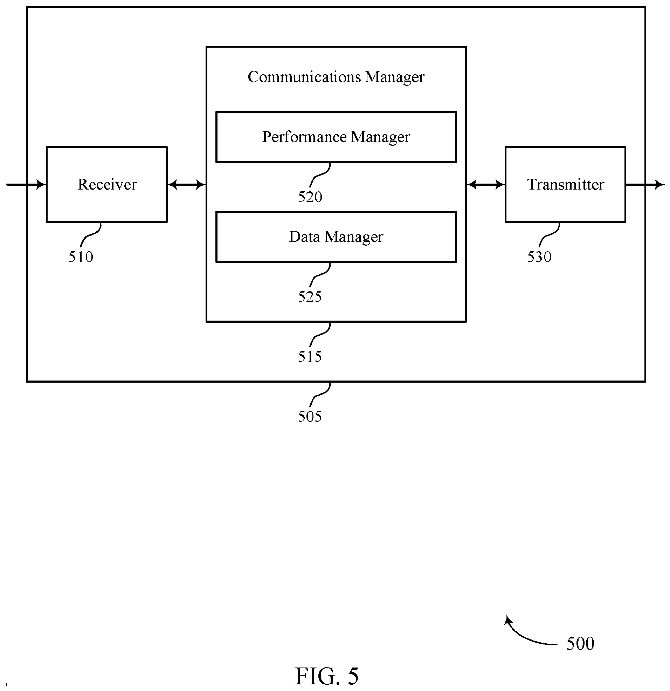

**FIG. 5** shows a diagram 500 of a device 505 that supports application client performance indicator management in accordance with aspects of the present disclosure. The device 505 may be an example of aspects of a device 405, or a UE 115 as described herein. The device 505 may include a receiver 510, a communications manager 515, and a transmitter 530. The device 505 may also include a processor. Each of these components may be in communication with one another (e.g., via one or more buses).

The receiver 510 may receive information such as packets, user data, or control information associated with various information channels (e.g., control channels, data channels, and information related to application client performance indicator management, etc.). Information may be passed on to other components of the device 505. The receiver 510 may be an example of aspects of the transceiver 720 described with reference to FIG. 7. The receiver 510 may utilize a single antenna or a set of antennas.

The communications manager 515 may be an example of aspects of the communications manager 415 as described herein. The communications manager 515 may include a performance manager 520 and a data manager 525. The communications manager 515 may be an example of aspects of the communications manager 710 described herein.

The performance manager 520 may transmit, to an edge data network via a wireless network, an indication of an adjustment to one or more performance indicators for an application client operating on the UE to receive service from the edge data network based on a UE modified performance profile for the application client.

The data manager 525 may communicate application data traffic with the edge data network via the wireless network in accordance with the one or more adjusted performance indicators.

The transmitter 530 may transmit signals generated by other components of the device 505. In some examples, the transmitter 530 may be collocated with a receiver 510 in a transceiver module. For example, the transmitter 530 may be an example of aspects of the transceiver 720 described with reference to FIG. 7. The transmitter 530 may utilize a single antenna or a set of antennas.

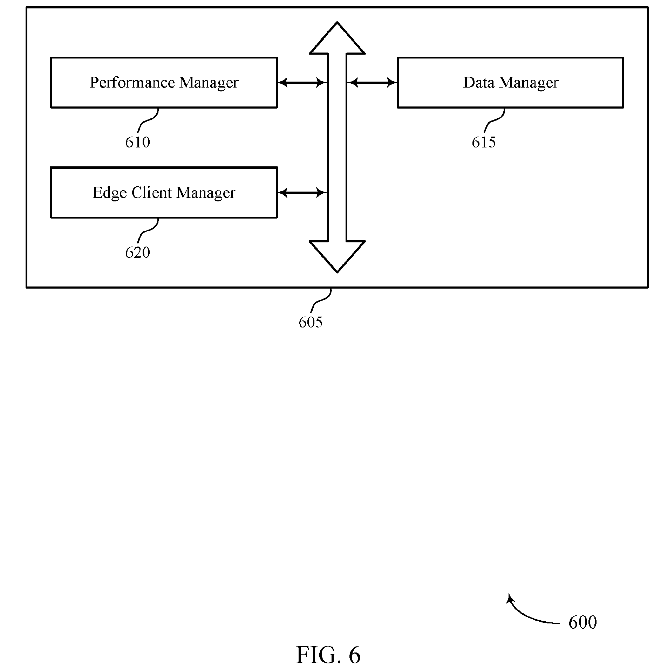

**FIG. 6** shows a diagram 600 of a communications manager 605 that supports application client performance indicator management in accordance with aspects of the present disclosure. The communications manager 605 may be an example of aspects of a communications manager 415, a communications manager 515, or a communications manager 710 described herein. The communications manager 605 may include a performance manager 610, a data manager 615, and an edge client manager 620. Each of these modules may communicate, directly or indirectly, with one another (e.g., via one or more buses).

The performance manager 610 may transmit, to an edge data network via a wireless network, an indication of an adjustment to one or more performance indicators for an application client operating on the UE to receive service from the edge data network based on a UE modified performance profile for the application client. In some cases, the wireless network is a cellular network. In some cases, the application client is a gaming application.

In some examples, the performance manager 610 may receive, from the edge data network via the wireless network, an indication of the one or more performance indicators for the application client. In some examples, the performance manager 610 may transmit the indication of the adjustment based on the edge service support message. In some examples, the performance manager 610 may transmit an indication of a second adjustment to one or more performance indicators for the application client based at least on an update to the UE modified performance profile for the application client.

In some examples, the performance manager 610 may transmit, to a base station of the wireless network, an indication of an adjustment to a radio resource performance indicator based on the UE modified performance profile, where the application data traffic is communicated via the base station of the wireless network in accordance with the adjusted radio resource performance indicator.

In some examples, the performance manager 610 may monitor execution of the application client to generate empirical data. In some examples, the performance manager 610 may generate the UE modified performance profile based on the empirical data. In some examples, the performance manager 610 may transmit an indication of an adjusted frame rate performance indicator based on the UE modified performance profile.

In some examples, the performance manager 610 may transmit an indication of an adjusted resolution performance indicator based on the UE modified performance profile. In some examples, the performance manager 610 may transmit an indication of an adjusted bit rate performance indicator based on the UE modified performance profile. In some examples, the performance manager 610 may transmit an indication of an adjusted bandwidth indicator based on the UE modified performance profile.

In some examples, the performance manager 610 may transmit an indication of an adjusted latency indicator based on the UE modified performance profile. In some examples, the performance manager 610 may transmit a request to the wireless network requesting a change to a quality of service parameter negotiated between the UE and the wireless network for an application data session via which the application data traffic is communicated based on the UE modified performance profile. In some examples, the performance manager 610 may transmit the indication of the adjustment to an edge enabler server, an edge configuration server, or both.

In some cases, the UE modified performance profile indicates, for the application client, an adjustment to the one or more performance indicators based on an available network quality of service performance parameter, a current radio link quality parameter, a UE thermal parameter, a UE processor load parameter, a UE storage availability parameter, a UE memory availability parameter, an edge resource availability parameter, an application data time sensitivity parameter, a predicted change parameter, a predicted quality of service change parameter, a predicted user behavior parameter, a security parameter, a privacy parameter, or any combination thereof.

The data manager 615 may communicate application data traffic with the edge data network via the wireless network in accordance with the one or more adjusted performance indicators. In some examples, the data manager 615 may present audio, video, or both, based on the application data traffic.

The edge client manager 620 may receive an edge service support message indicating edge service support for the application client. In some examples, the edge client manager 620 may transmit an indication of a first adjusted performance factor to indicate that processing of the application data traffic is to be performed by the UE, is to be performed by the edge data network, or is to be split between the UE and the edge data network.

In some examples, the edge client manager 620 may communicate the application data traffic with an edge application server of the edge data network. In some examples, the edge client manager 620 may identify that the gaming application is unaware that edge service support is available via the edge data network.

**FIG. 7** shows a diagram of a system 700 including a device 705 that supports application client performance indicator management in accordance with aspects of the present disclosure. The device 705 may be an example of or include the components of device 405, device 505, or a UE 115 as described herein. The device 705 may include components for bi-directional voice and data communications including components for transmitting and receiving communications, including a communications manager 710, an I/O controller 715, a transceiver 720, an antenna 725, memory 730, and a processor 740. These components may be in electronic communication via one or more buses (e.g., bus 745).

The communications manager 710 may transmit, to an edge data network via a wireless network, an indication of an adjustment to one or more performance indicators for an application client operating on the UE to receive service from the edge data network based on a UE modified performance profile for the application client and communicate application data traffic with the edge data network via the wireless network in accordance with the one or more adjusted performance indicators.

The I/O controller 715 may manage input and output signals for the device 705. The I/O controller 715 may also manage peripherals not integrated into the device 705. In some cases, the I/O controller 715 may represent a physical connection or port to an external peripheral. In some cases, the I/O controller 715 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 715 may represent or interact with a modem, a keyboard, a mouse, a touchscreen, or a similar device. In some cases, the I/O controller 715 may be implemented as part of a processor. In some cases, a user may interact with the device 705 via the I/O controller 715 or via hardware components controlled by the I/O controller 715.

The transceiver 720 may communicate bi-directionally, via one or more antennas, wired, or wireless links as described herein. For example, the transceiver 720 may represent a wireless transceiver and may communicate bi-directionally with another wireless transceiver. The transceiver 720 may also include a modem to modulate the packets and provide the modulated packets to the antennas for transmission, and to demodulate packets received from the antennas.

In some cases, the wireless device may include a single antenna 725. However, in some cases the device may have more than one antenna 725, which may be capable of concurrently transmitting or receiving multiple wireless transmissions.

The memory 730 may include RAM and ROM. The memory 730 may store computer-readable, computer-executable code 735 including instructions that, when executed, cause the processor to perform various functions described herein. In some cases, the memory 730 may contain, among other things, a BIOS which may control basic hardware or software operation such as the interaction with peripheral components or devices.

The processor 740 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 740 may be configured to operate a memory array using a memory controller. In other cases, a memory controller may be integrated into the processor 740. The processor 740 may be configured to execute computer-readable instructions stored in a memory (e.g., the memory 730) to cause the device 705 to perform various functions (e.g., functions or tasks supporting application client performance indicator management).

The code 735 may include instructions to implement aspects of the present disclosure, including instructions to support wireless communications. The code 735 may be stored in a non-transitory computer-readable medium such as system memory or other type of memory. In some cases, the code 735 may not be directly executable by the processor 740 but may cause a computer (e.g., when compiled and executed) to perform functions described herein.

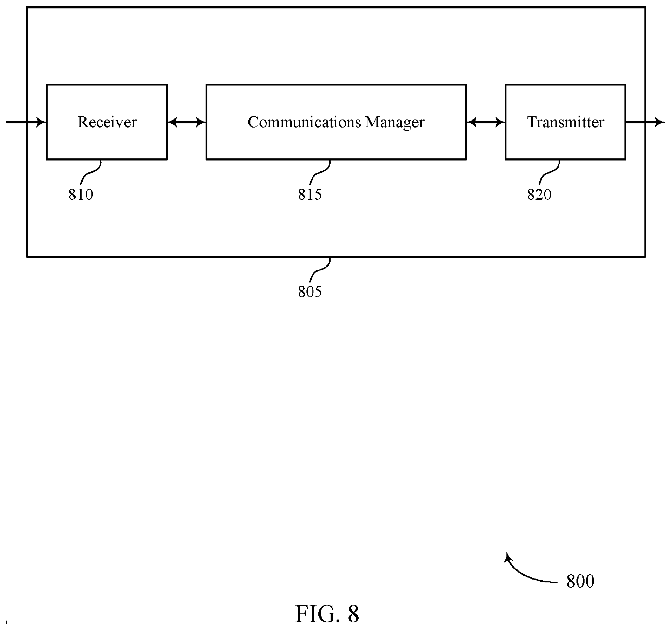

**FIG. 8** shows a diagram 800 of a device 805 that supports application client performance indicator management in accordance with aspects of the present disclosure. The device 805 may be an example of aspects of an edge device or edge server as described herein. The device 805 may include a receiver 810, a communications manager 815, and a transmitter 820. The device 805 may also include a processor. Each of these components may be in communication with one another (e.g., via one or more buses).

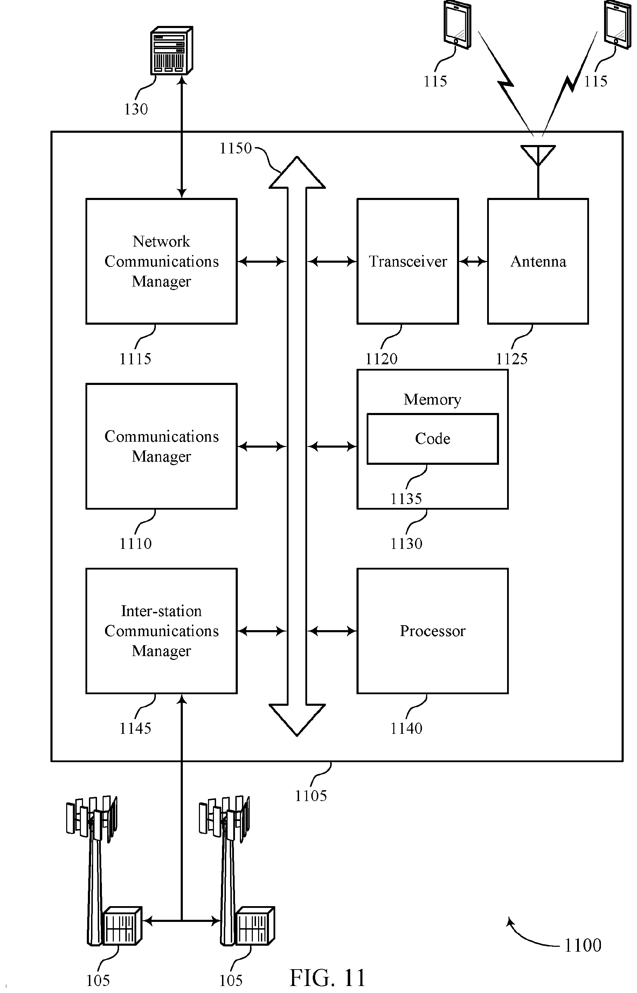

The receiver 810 may receive information such as packets, user data, or control information associated with various information channels (e.g., control channels, data channels, and information related to application client performance indicator management, etc.). Information may be passed on to other components of the device 805. The receiver 810 may be an example of aspects of the transceiver 1120 described with reference to FIG. 11. The receiver 810 may utilize a single antenna or a set of antennas.

The communications manager 815 may receive, from a UE via a wireless network, an indication of an adjustment to one or more performance indicators for an application client operating on the UE to receive service from the edge data network based on a UE modified performance profile for the application client and communicate application data traffic with the UE via the wireless network in accordance with the one or more adjusted performance indicators. The communications manager 815 may be an example of aspects of the communications manager 1110 described herein.

The communications manager 815, or its sub-components, may be implemented in hardware, code (e.g., software or firmware) executed by a processor, or any combination thereof. If implemented in code executed by a processor, the functions of the communications manager 815, or its sub-components may be executed by a general-purpose processor, a DSP, an application-specific integrated circuit (ASIC), a FPGA or other programmable logic device, discrete gate or transistor logic, discrete hardware components, or any combination thereof designed to perform the functions described in the present disclosure.

The communications manager 815, or its sub-components, may be physically located at various positions, including being distributed such that portions of functions are implemented at different physical locations by one or more physical components. In some examples, the communications manager 815, or its sub-components, may be a separate and distinct component in accordance with various aspects of the present disclosure. In some examples, the communications manager 815, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 820 may transmit signals generated by other components of the device 805. In some examples, the transmitter 820 may be collocated with a receiver 810 in a transceiver module. For example, the transmitter 820 may be an example of aspects of the transceiver 1120 described with reference to FIG. 11. The transmitter 820 may utilize a single antenna or a set of antennas.

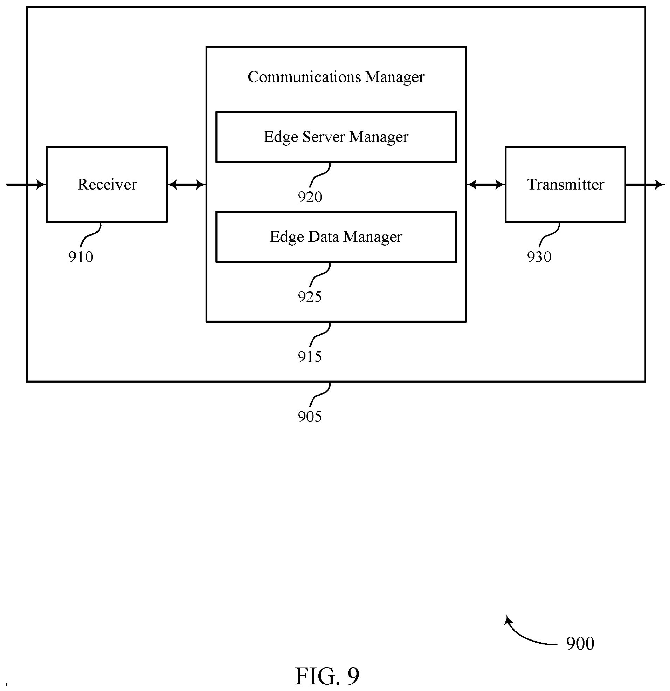

**FIG. 9** shows a diagram 900 of a device 905 that supports application client performance indicator management in accordance with aspects of the present disclosure. The device 905 may be an example of aspects of a device 805, or a base station 105 as described herein. The device 905 may include a receiver 910, a communications manager 915, and a transmitter 930. The device 905 may also include a processor. Each of these components may be in communication with one another (e.g., via one or more buses).

The receiver 910 may receive information such as packets, user data, or control information associated with various information channels (e.g., control channels, data channels, and information related to application client performance indicator management, etc.). Information may be passed on to other components of the device 905. The receiver 910 may be an example of aspects of the transceiver 1120 described with reference to FIG. 11. The receiver 910 may utilize a single antenna or a set of antennas.

The communications manager 915 may be an example of aspects of the communications manager 815 as described herein. The communications manager 915 may include an edge server manager 920 and an edge data manager 925. The communications manager 915 may be an example of aspects of the communications manager 1110 described herein.

The edge server manager 920 may receive, from a UE via a wireless network, an indication of an adjustment to one or more performance indicators for an application client operating on the UE to receive service from the edge data network based on a UE modified performance profile for the application client.

The edge data manager 925 may communicate application data traffic with the UE via the wireless network in accordance with the one or more adjusted performance indicators.

The transmitter 930 may transmit signals generated by other components of the device 905. In some examples, the transmitter 930 may be collocated with a receiver 910 in a transceiver module. For example, the transmitter 930 may be an example of aspects of the transceiver 1120 described with reference to FIG. 11. The transmitter 930 may utilize a single antenna or a set of antennas.

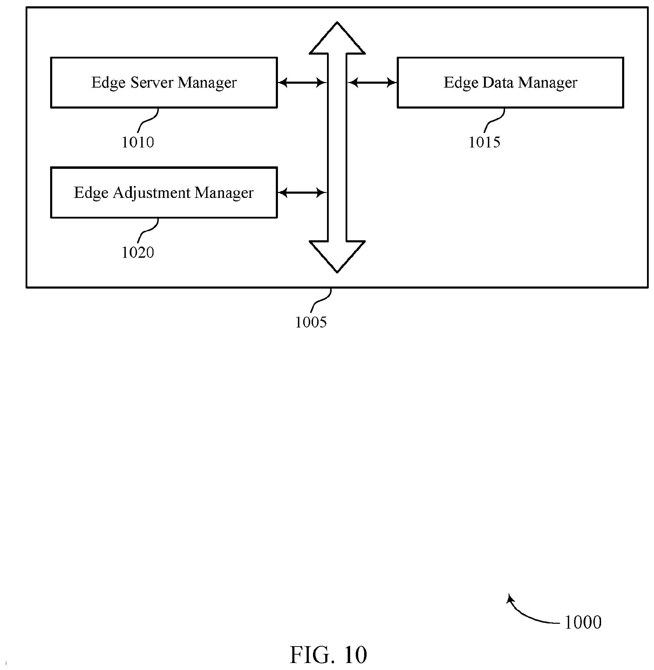

**FIG. 10** shows a diagram 1000 of a communications manager 1005 that supports application client performance indicator management in accordance with aspects of the present disclosure. The communications manager 1005 may be an example of aspects of a communications manager 815, a communications manager 915, or a communications manager 1110 described herein. The communications manager 1005 may include an edge server manager 1010, an edge data manager 1015, and an edge adjustment manager 1020. Each of these modules may communicate, directly or indirectly, with one another (e.g., via one or more buses).

The edge server manager 1010 may receive, from a UE via a wireless network, an indication of an adjustment to one or more performance indicators for an application client operating on the UE to receive service from the edge data network based on a UE modified performance profile for the application client. In some examples, the edge server manager 1010 may transmit, to the UE via the wireless network, an indication of the one or more performance indicators for the application client. In some cases, the wireless network is a cellular network.

In some examples, the edge server manager 1010 may transmit, to the UE via the wireless network, an edge service support message indicating edge service support for the application client. In some examples, the edge server manager 1010 may receive, from the UE via the wireless network, an indication of a second adjustment to one or more performance indicators for the application client based at least on an update to the UE modified performance profile for the application client.

In some examples, the edge server manager 1010 may receive an indication of a first adjusted performance factor to indicate that processing of the application data traffic is to be performed by the UE, is to be performed by the edge data network, or is to be split between the UE and the edge data network.

In some cases, the UE modified performance profile indicates, for the application client, an adjustment to the one or more performance indicators based on an available network quality of service performance parameter, a current radio link quality parameter, a UE thermal parameter, a UE processor load parameter, a UE storage availability parameter, a UE memory availability parameter, an edge resource availability parameter, an application data time sensitivity parameter, a predicted change parameter, a predicted quality of service change parameter, a predicted user behavior parameter, a security parameter, a privacy parameter, or any combination thereof.

The edge data manager 1015 may communicate application data traffic with the UE via the wireless network in accordance with the one or more adjusted performance indicators. In some examples, the edge data manager 1015 may transmit a request to the wireless network requesting a change to a quality of service parameter negotiated between the UE and the wireless network for an application data session via which the application data traffic is communicated based on the one or more adjusted performance indicators.

The edge adjustment manager 1020 may receive an indication of an adjusted frame rate performance indicator based on the UE modified performance profile. In some examples, the edge adjustment manager 1020 may receive an indication of an adjusted resolution performance indicator based on the UE modified performance profile. In some examples, the edge adjustment manager 1020 may receive an indication of an adjusted bit rate performance indicator based on the UE modified performance profile.

In some examples, the edge adjustment manager 1020 may receive an indication of an adjusted bandwidth indicator based on the UE modified performance profile. In some examples, the edge adjustment manager 1020 may receive an indication of an adjusted latency indicator based on the UE modified performance profile.

**FIG. 11** shows a diagram of a system 1100 including a device 1105 that supports application client performance indicator management in accordance with aspects of the present disclosure. The device 1105 may be an example of or include the components of device 805, device 905, or a base station 105 as described herein. The device 1105 may include components for bi-directional voice and data communications including components for transmitting and receiving communications, including a communications manager 1110, a network communications manager 1115, a transceiver 1120, an antenna 1125, memory 1130, a processor 1140, and an inter-station communications manager 1145. These components may be in electronic communication via one or more buses (e.g., bus 1150).

The communications manager 1110 may receive, from a UE via a wireless network, an indication of an adjustment to one or more performance indicators for an application client operating on the UE to receive service from the edge data network based on a UE modified performance profile for the application client and communicate application data traffic with the UE via the wireless network in accordance with the one or more adjusted performance indicators.

The network communications manager 1115 may manage communications with the core network (e.g., via one or more wired backhaul links). For example, the network communications manager 1115 may manage the transfer of data communications for client devices, such as one or more UEs 115.

The transceiver 1120 may communicate bi-directionally, via one or more antennas, wired, or wireless links as described herein. For example, the transceiver 1120 may represent a wireless transceiver and may communicate bi-directionally with another wireless transceiver. The transceiver 1120 may also include a modem to modulate the packets and provide the modulated packets to the antennas for transmission, and to demodulate packets received from the antennas.

In some cases, the wireless device may include a single antenna 1125. However, in some cases the device may have more than one antenna 1125, which may be capable of concurrently transmitting or receiving multiple wireless transmissions.

The memory 1130 may include RAM, ROM, or a combination thereof. The memory 1130 may store computer-readable code 1135 including instructions that, when executed by a processor (e.g., the processor 1140) cause the device to perform various functions described herein. In some cases, the memory 1130 may contain, among other things, a BIOS which may control basic hardware or software operation such as the interaction with peripheral components or devices.

The processor 1140 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1140 may be configured to operate a memory array using a memory controller. In some cases, a memory controller may be integrated into processor 1140. The processor 1140 may be configured to execute computer-readable instructions stored in a memory (e.g., the memory 1130) to cause the device 1105 to perform various functions (e.g., functions or tasks supporting application client performance indicator management).

The inter-station communications manager 1145 may manage communications with other base station 105, and may include a controller or scheduler for controlling communications with UEs 115 in cooperation with other base stations 105. For example, the inter-station communications manager 1145 may coordinate scheduling for transmissions to UEs 115 for various interference mitigation techniques such as beamforming or joint transmission. In some examples, the inter-station communications manager 1145 may provide an X2 interface within an LTE/LTE-A wireless communication network technology to provide communication between base stations 105.

The code 1135 may include instructions to implement aspects of the present disclosure, including instructions to support wireless communications. The code 1135 may be stored in a non-transitory computer-readable medium such as system memory or other type of memory. In some cases, the code 1135 may not be directly executable by the processor 1140 but may cause a computer (e.g., when compiled and executed) to perform functions described herein.

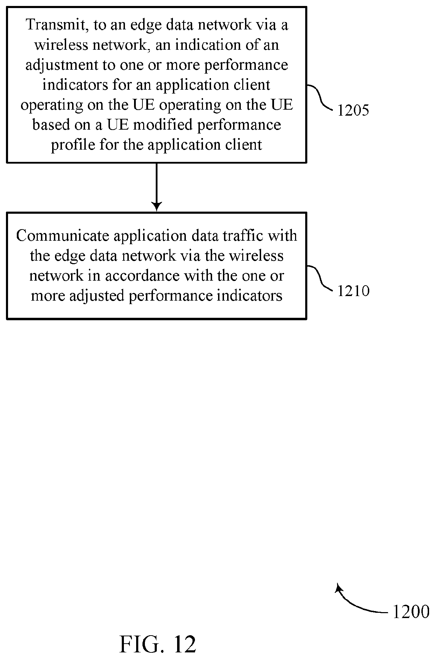

**FIG. 12** shows a flowchart illustrating a method 1200 that supports application client performance indicator management in accordance with aspects of the present disclosure. The operations of method 1200 may be implemented by a UE 115 or its components as described herein. For example, the operations of method 1200 may be performed by a communications manager as described with reference to FIGs. 4 through 7. In some examples, a UE may execute a set of instructions to control the functional elements of the UE to perform the functions described herein. Additionally or alternatively, a UE may perform aspects of the functions described herein using special-purpose hardware.

At 1205, the UE may transmit, to an edge data network via a wireless network, an indication of an adjustment to one or more performance indicators for an application client operating on the UE to receive service from the edge data network based on a UE modified performance profile for the application client. The operations of 1205 may be performed according to the methods described herein. In some examples, aspects of the operations of 1205 may be performed by a performance manager as described with reference to FIGs. 4 through 7.

At 1210, the UE may communicate application data traffic with the edge data network via the wireless network in accordance with the one or more adjusted performance indicators. The operations of 1210 may be performed according to the methods described herein. In some examples, aspects of the operations of 1210 may be performed by a data manager as described with reference to FIGs. 4 through 7.

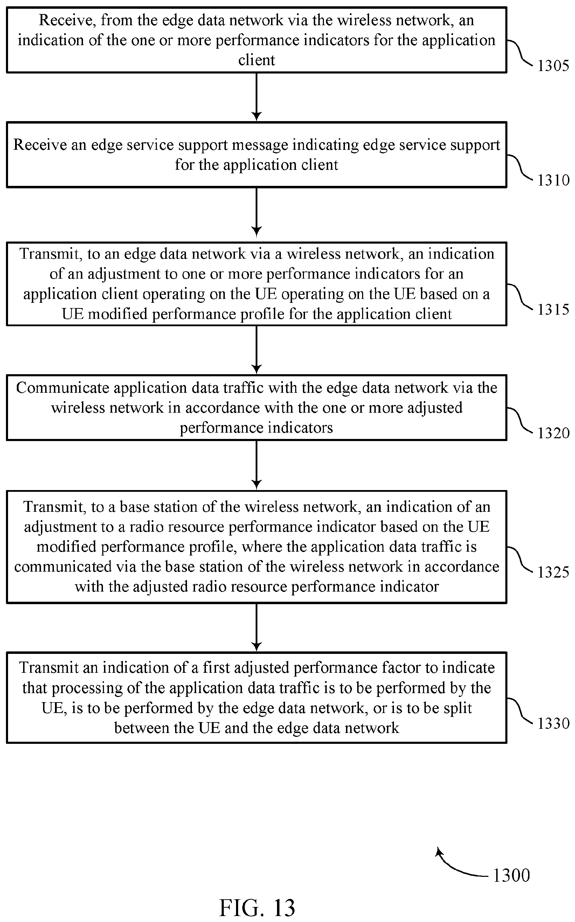

**FIG. 13** shows a flowchart illustrating a method 1300 that supports application client performance indicator management in accordance with aspects of the present disclosure. The operations of method 1300 may be implemented by a UE 115 or its components as described herein. For example, the operations of method 1300 may be performed by a communications manager as described with reference to FIGs. 4 through 7. In some examples, a UE may execute a set of instructions to control the functional elements of the UE to perform the functions described herein. Additionally or alternatively, a UE may perform aspects of the functions described herein using special-purpose hardware.

At 1305, the UE may receive, from the edge data network via the wireless network, an indication of the one or more performance indicators for the application client. The operations of 1305 may be performed according to the methods described herein. In some examples, aspects of the operations of 1305 may be performed by a performance manager as described with reference to FIGs. 4 through 7.

At 1310, the UE may receive an edge service support message indicating edge service support for the application client. The operations of 1310 may be performed according to the methods described herein. In some examples, aspects of the operations of 1310 may be performed by an edge client manager as described with reference to FIGs. 4 through 7.

At 1315, the UE may transmit, to an edge data network via a wireless network, an indication of an adjustment to one or more performance indicators for an application client operating on the UE to receive service from the edge data network based on a UE modified performance profile for the application client. The operations of 1315 may be performed according to the methods described herein. In some examples, aspects of the operations of 1315 may be performed by a performance manager as described with reference to FIGs. 4 through 7.

At 1320, the UE may communicate application data traffic with the edge data network via the wireless network in accordance with the one or more adjusted performance indicators. The operations of 1320 may be performed according to the methods described herein. In some examples, aspects of the operations of 1320 may be performed by a data manager as described with reference to FIGs. 4 through 7.

At 1325, the UE may transmit, to a base station of the wireless network, an indication of an adjustment to a radio resource performance indicator based on the UE modified performance profile, where the application data traffic is communicated via the base station of the wireless network in accordance with the adjusted radio resource performance indicator. The operations of 1325 may be performed according to the methods described herein. In some examples, aspects of the operations of 1325 may be performed by a performance manager as described with reference to FIGs. 4 through 7.

At 1330, the UE may transmit an indication of a first adjusted performance factor to indicate that processing of the application data traffic is to be performed by the UE, is to be performed by the edge data network, or is to be split between the UE and the edge data network. The operations of 1330 may be performed according to the methods described herein. In some examples, aspects of the operations of 1330 may be performed by an edge client manager as described with reference to FIGs. 4 through 7.

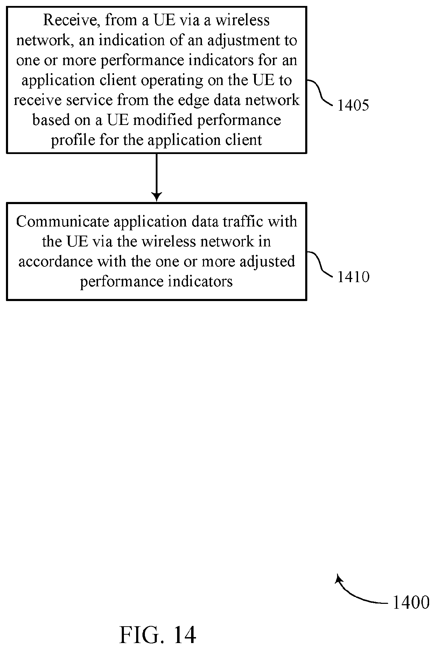

**FIG. 14** shows a flowchart illustrating a method 1400 that supports application client performance indicator management in accordance with aspects of the present disclosure. The operations of method 1400 may be implemented by a base station 105 or its components as described herein. For example, the operations of method 1400 may be performed by a communications manager as described with reference to FIGs. 8 through 11. In some examples, a base station may execute a set of instructions to control the functional elements of the base station to perform the functions described herein. Additionally or alternatively, a base station may perform aspects of the functions described herein using special-purpose hardware.

At 1405, the base station may receive, from a UE via a wireless network, an indication of an adjustment to one or more performance indicators for an application client operating on the UE to receive service from the edge data network based on a UE modified performance profile for the application client. The operations of 1405 may be performed according to the methods described herein. In some examples, aspects of the operations of 1405 may be performed by an edge server manager as described with reference to FIGs. 8 through 11.

At 1410, the base station may communicate application data traffic with the UE via the wireless network in accordance with the one or more adjusted performance indicators. The operations of 1410 may be performed according to the methods described herein. In some examples, aspects of the operations of 1410 may be performed by an edge data manager as described with reference to FIGs. 8 through 11.

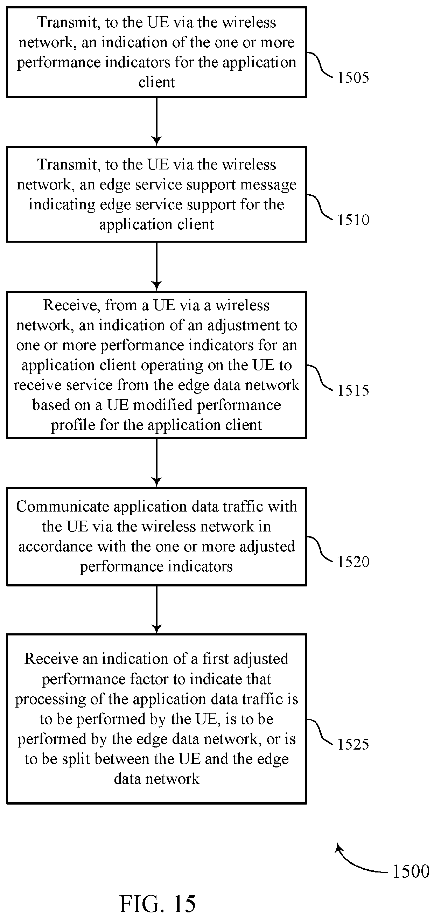

**FIG. 15** shows a flowchart illustrating a method 1500 that supports application client performance indicator management in accordance with aspects of the present disclosure. The operations of method 1500 may be implemented by a base station 105 or its components as described herein. For example, the operations of method 1500 may be performed by a communications manager as described with reference to FIGs. 8 through 11. In some examples, a base station may execute a set of instructions to control the functional elements of the base station to perform the functions described herein. Additionally or alternatively, a base station may perform aspects of the functions described herein using special-purpose hardware.

At 1505, the base station may transmit, to the UE via the wireless network, an indication of the one or more performance indicators for the application client. The operations of 1505 may be performed according to the methods described herein. In some examples, aspects of the operations of 1505 may be performed by an edge server manager as described with reference to FIGs. 8 through 11.

At 1510, the base station may transmit, to the UE via the wireless network, an edge service support message indicating edge service support for the application client. The operations of 1510 may be performed according to the methods described herein. In some examples, aspects of the operations of 1510 may be performed by an edge server manager as described with reference to FIGs. 8 through 11.

At 1515, the base station may receive, from a UE via a wireless network, an indication of an adjustment to one or more performance indicators for an application client operating on the UE to receive service from the edge data network based on a UE modified performance profile for the application client. The operations of 1515 may be performed according to the methods described herein. In some examples, aspects of the operations of 1515 may be performed by an edge server manager as described with reference to FIGs. 8 through 11.

At 1520, the base station may communicate application data traffic with the UE via the wireless network in accordance with the one or more adjusted performance indicators. The operations of 1520 may be performed according to the methods described herein. In some examples, aspects of the operations of 1520 may be performed by an edge data manager as described with reference to FIGs. 8 through 11.

At 1525, the base station may receive an indication of a first adjusted performance factor to indicate that processing of the application data traffic is to be performed by the UE, is to be performed by the edge data network, or is to be split between the UE and the edge data network. The operations of 1525 may be performed according to the methods described herein. In some examples, aspects of the operations of 1525 may be performed by an edge server manager as described with reference to FIGs. 8 through 11.

It should be noted that the methods described herein describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE, LTE-A, and LTE-A Pro are releases of UMTS that use E-UTRA. UTRA, E-UTRA, UMTS, LTE, LTE-A, LTE-A Pro, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned herein as well as other systems and radio technologies. While aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR applications.

A macro cell generally covers a relatively large geographic area (e.g., several kilometers in radius) and may allow unrestricted access by UEs with service subscriptions with the network provider. A small cell may be associated with a lower-powered base station, as compared with a macro cell, and a small cell may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs with service subscriptions with the network provider. A femto cell may also cover a small geographic area (e.g., a home) and may provide restricted access by UEs having an association with the femto cell (e.g., UEs in a closed subscriber group (CSG), UEs for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells, and may also support communications using one or multiple component carriers.

The wireless communications systems described herein may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a DSP, an ASIC, an FPGA, or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope and spirit of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of" or "one or more of") indicates a disjunctive list such that, for example, a list of "at least one of A, B, or C" means A or B or C or AB or AC or BC or ABC (i.e., A and B and C).

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may include random-access memory (RAM), read-only memory (ROM), electrically erasable programmable ROM (EEPROM), flash memory, compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in diagram form in order to avoid obscuring the concepts of the described examples.

The description herein is provided to enable a person skilled in the art to make or use the disclosure. Various modifications to the disclosure will be readily apparent to those skilled in the art, and the generic principles defined herein may be applied to other variations without departing from the scope of the disclosure. Thus, the disclosure is not limited to the examples and designs described herein, but is to be accorded the broadest scope consistent with the principles and novel features disclosed herein. The invention is defined in the independent claims as appended. Advantageous features are described in the dependent claims.

## Claims

1. A method for wireless communications by a user equipment, UE (115, 115-a, 115-b), comprising:
receiving (310, 1305), from an edge data network (210) via a wireless network, an indication of one or more performance indicators for an application client (220) that is unaware that edge service support is available via the edge data network (210);
receiving (315, 1310), from the edge data network via the wireless network, an edge service support message indicating edge service support for the application client (220);
transmitting (320, 350, 1205), to the edge data network (210) via the wireless network, an indication of an adjustment to the one or more performance indicators for the application client (220) operating on the UE to receive service from the edge data network, the adjustment to the one or more performance indicators based at least in part on a UE-modified performance profile for the application client (220); and
communicating (330, 370, 1210) application data traffic with the edge data network (210) via the wireless network to provide edge service to the application client (220) in accordance with the one or more adjusted performance indicators.

2. The method of claim 1,
wherein transmitting (320, 350, 1205) the indication of the adjustment comprises:
transmitting the indication of the adjustment based at least in part on the edge service support message.

3. The method of claim 1, further comprising:
transmitting (1315) an indication of a second adjustment to the one or more performance indicators for the application client (220) based at least on an update to the UE-modified performance profile for the application client (220); or
the method of claim 1, further comprising:
transmitting (355, 1325), to a base station of the wireless network, an indication of an adjustment to a radio resource performance indicator based at least in part on the UE-modified performance profile, wherein the application data traffic is communicated via the base station of the wireless network in accordance with the adjusted radio resource performance indicator; or
the method of claim 1, wherein transmitting (320, 350, 1205) the indication of the adjustment comprises:
transmitting (1330) an indication of a first adjusted performance factor to indicate that processing of the application data traffic is to be performed by the UE, is to be performed by the edge data network (210), or is to be split between the UE and the edge data network (210).

4. The method of claim 1, further comprising:
monitoring (340) execution of the application client (220) to generate empirical data; and
generating (345) the UE-modified performance profile based at least in part on the empirical data; or
the method of claim 1, wherein the UE-modified performance profile indicates, for the application client (220), an adjustment to the one or more performance indicators based at least in part on an available network quality of service performance parameter, a current radio link quality parameter, a UE thermal parameter, a UE processor load parameter, a UE storage availability parameter, a UE memory availability parameter, an edge resource availability parameter, an application data time sensitivity parameter, a predicted change parameter, a predicted quality of service change parameter, a predicted user behavior parameter, a security parameter, a privacy parameter, or any combination thereof; or
the method of claim 1, wherein transmitting (320, 350, 1205) the indication of the adjustment comprises:
transmitting an indication of an adjusted frame rate performance indicator based at least in part on the UE-modified performance profile.

5. The method of claim 1, wherein transmitting (320, 350, 1205) the indication of the adjustment comprises:
transmitting an indication of an adjusted resolution performance indicator based at least in part on the UE-modified performance profile; or
the method of claim 1, wherein transmitting (320, 350, 1205) the indication of the adjustment comprises:
transmitting an indication of an adjusted bit rate performance indicator based at least in part on the UE-modified performance profile; or
the method of claim 1, wherein transmitting (320, 350, 1205) the indication of the adjustment comprises:
transmitting an indication of an adjusted bandwidth indicator based at least in part on the UE-modified performance profile.

6. The method of claim 1, wherein transmitting (320, 350, 1205) the indication of the adjustment comprises:
transmitting an indication of an adjusted latency indicator based at least in part on the UE-modified performance profile; or
the method of claim 1, further comprising:
transmitting (360) a request to the wireless network requesting a change to a quality of service parameter negotiated between the UE and the wireless network for an application data session via which the application data traffic is communicated based at least in part on the UE-modified performance profile; or
the method of claim 1, wherein communicating (330, 370, 1210) the application data traffic comprises:
communicating the application data traffic with an edge application server of the edge data network (210); or
the method of claim 1, wherein transmitting (320, 350, 1205) the indication of the adjustment comprises:
transmitting the indication of the adjustment to an edge enabler server, an edge configuration server, or both.

7. A method for wireless communications by an edge server of an edge data network (210), comprising:
transmitting (310, 1505), to a user equipment, UE (115, 115-a, 115-b) via a wireless network, an indication of one or more performance indicators for an application client (220) that is unaware that edge service support is available via the edge data network (210);
transmitting (315, 1510), to the UE via the wireless network, an edge service support message indicating edge service support for the application client (220);
receiving (320, 350, 1405), from the UE (115, 115-a, 115-b), via the wireless network, an indication of an adjustment to the one or more performance indicators for the application client(220) operating on the UE to receive service from the edge data network, the adjustment to the one or more performance indicators based at least in part on a UE-modified performance profile for the application client (220); and
communicating (330, 370, 1410) application data traffic with the UE via the wireless network to provide edge service to the application client (220) in accordance with the one or more adjusted performance indicators.

8. The method of claim 7, further comprising:
receiving (350), from the UE via the wireless network, an indication of a second adjustment to one or more performance indicators for the application client (220) based at least on an update to the UE-modified performance profile for the application client (220); or
the method of claim 7, wherein receiving (320, 350, 1405) the indication of the adjustment comprises:
receiving (1525) an indication of a first adjusted performance factor to indicate that processing of the application data traffic is to be performed by the UE, is to be performed by the edge data network (210), or is to be split between the UE and the edge data network (210).

9. The method of claim 7, wherein the UE-modified performance profile indicates, for the application client (220), an adjustment to the one or more performance indicators based at least in part on an available network quality of service performance parameter, a current radio link quality parameter, a UE thermal parameter, a UE processor load parameter, a UE storage availability parameter, a UE memory availability parameter, an edge resource availability parameter, an application data time sensitivity parameter, a predicted change parameter, a predicted quality of service change parameter, a predicted user behavior parameter, a security parameter, a privacy parameter, or any combination thereof; or
the method of claim 7, wherein receiving (320, 350, 1405) the indication of the adjustment comprises:
receiving, based at least in part on the UE-modified performance profile, an indication of an adjusted frame rate performance indicator, or an indication of an adjusted resolution performance indicator, or an indication of an adjusted bit rate performance indicator, or an indication of an adjusted bandwidth indicator, or an indication of an adjusted latency indicator, or any combination thereof.

10. The method of claim 7, further comprising:
transmitting a request to the wireless network requesting a change to a quality of service parameter negotiated between the UE and the wireless network for an application data session via which the application data traffic is communicated based at least in part on the one or more adjusted performance indicators; or
the method of claim 7, wherein the wireless network is a cellular network.

11. An apparatus for wireless communications, comprising:
means for receiving, from an edge data network (210) via a wireless network, an indication of one or more performance indicators for an application client (220) that is unaware that edge service support is available via the edge data network (210);
means for receiving, from the edge data network (210) via the wireless network, an edge service support message indicating edge service support for the application client (220);
means for transmitting, to the edge data network (210) via the wireless network, an indication of an adjustment to the one or more performance indicators for the application client (220) operating on the apparatus to receive service from the edge data network (210), the adjustment to the one or more performance indicators based at least in part on an apparatus modified performance profile for the application client (220); and
means for communicating application data traffic with the edge data network (210) via the wireless network to provide edge service to the application client (220) in accordance with the one or more adjusted performance indicators.

12. The apparatus for wireless communication according to claim 11, further comprising means for carrying out the method of any of claims 2 to 6.

13. An apparatus for wireless communications of an edge data network (210), comprising:
means for transmitting, to a user equipment, UE (115, 115-a, 115-b) via a wireless network, an indication of one or more performance indicators for an application client (220) that is unaware that edge service support is available via the edge data network (210);
means for transmitting, to the UE via the wireless network, an edge service support message indicating edge service support for the application client (220);
means for receiving, from the UE (115, 115-a, 115-b) via the wireless network, an indication of an adjustment to the one or more performance indicators for the application client (220) operating on the UE to receive service from the edge data network (210), the adjustment to the one or more performance indicators based at least in part on a UE-modified performance profile for the application client (220); and
means for communicating application data traffic with the UE via the wireless network to provide edge service to the application client (220) in accordance with the one or more adjusted performance indicators.

14. The apparatus for wireless communication according to claim 13, further comprising means for carrying out the method of any of claims 8 to 10.

15. A computer program comprising instructions which, when the program is executed by a computer, cause the computer to carry out the method of any of claims 1 to 6 or 7 to 10.

## Patentansprüche

1. Verfahren für drahtlose Kommunikationen durch ein Benutzergerät, UE (115, 115-a, 115-b), umfassend:
Empfangen (310, 1305), von einem Edge-Datennetzwerk (210) über ein drahtloses Netzwerk, einer Angabe eines oder mehrerer Leistungsindikatoren für einen Anwendungsclient (220), der nicht weiß, dass Edge-Dienstunterstützung über das Edge-Datennetzwerk (210) verfügbar ist;
Empfangen (315, 1310), von dem Edge-Datennetzwerk über das drahtlose Netzwerk, einer Edge-Dienstunterstützungsnachricht, die Edge-Dienstunterstützung für den Anwendungsclient (220) angibt;
Übertragen (320, 350, 1205), an das Edge-Datennetzwerk (210) über das drahtlose Netzwerk, einer Angabe einer Anpassung an den einen oder die mehreren Leistungsindikatoren für den Anwendungsclient (220), der auf dem UE arbeitet, um Dienst von dem Edge-Datennetzwerk zu empfangen, wobei die Anpassung an den einen oder die mehreren Leistungsindikatoren zumindest teilweise auf einem UE-modifizierten Leistungsprofil für den Anwendungsclient (220) basiert; und
Kommunizieren (330, 370, 1210) von Anwendungsdatenverkehr mit dem Edge-Datennetzwerk (210) über das drahtlose Netzwerk, um Edge-Dienst für den Anwendungsclient (220) gemäß dem einen oder den mehreren angepassten Leistungsindikatoren bereitzustellen.

2. Verfahren nach Anspruch 1,
wobei das Übertragen (320, 350, 1205) der Angabe der Anpassung Folgendes umfasst:
Übertragen der Angabe der Anpassung zumindest teilweise basierend auf der Edge-Dienstunterstützungsnachricht.

3. Verfahren nach Anspruch 1, ferner umfassend:
Übertragen (1315) einer Angabe einer zweiten Anpassung an den einen oder die mehreren Leistungsindikatoren für den Anwendungsclient (220) basierend zumindest auf einer Aktualisierung des UE-modifizierten Leistungsprofils für den Anwendungsclient (220); oder
Verfahren nach Anspruch 1, ferner umfassend:
Übertragen (355, 1325), an eine Basisstation des drahtlosen Netzwerks, einer Angabe einer Anpassung an einen Funkressourcenleistungsindikator basierend zumindest teilweise auf dem UE-modifizierten Leistungsprofil, wobei der Anwendungsdatenverkehr über die Basisstation des drahtlosen Netzwerks gemäß dem angepassten Funkressourcenleistungsindikator kommuniziert wird; oder
Verfahren nach Anspruch 1, wobei das Übertragen (320, 350, 1205) der Angabe der Anpassung Folgendes umfasst:
Übertragen (1330) einer Angabe eines ersten angepassten Leistungsfaktors, um anzugeben, dass die Verarbeitung des Anwendungsdatenverkehrs durch das UE durchzuführen ist, durch das Edge-Datennetzwerk (210) durchzuführen ist oder zwischen dem UE und dem Edge-Datennetzwerk (210) aufzuteilen ist.

4. Verfahren nach Anspruch 1, ferner umfassend:
Überwachen (340) der Ausführung des Anwendungsclients (220), um empirische Daten zu erzeugen; und
Erzeugen (345) des UE-modifizierten Leistungsprofils basierend zumindest teilweise auf den empirischen Daten; oder
Verfahren nach Anspruch 1, wobei das DE-modifizierte Leistungsprofil für den Anwendungsclient (220) eine Anpassung an den einen oder die mehreren Leistungsindikatoren basierend zumindest teilweise auf einem verfügbaren Netzwerkdienstqualitätsleistungsparameter, einem aktuellen Funkverbindungsqualitätsparameter, einem UE-Wärmeparameter, einem UE-Prozessorlastparameter, einem UE-Speicherverfügbarkeitsparameter, einem UE-Memoryverfügbarkeitsparameter, einem Edge-Ressourcenverfügbarkeitsparameter, einem Anwendungsdatenzeitempfindlichkeitsparameter, einem vorhergesagten Änderungsparameter, einem vorhergesagten Dienstqualitätsänderungsparameter, einem vorhergesagten Benutzerverhaltensparameter, einem Sicherheitsparameter, einem Privatsphärenparameter oder einer beliebigen Kombination davon angibt; oder
Verfahren nach Anspruch 1, wobei das Übertragen (320, 350, 1205) der Angabe der Anpassung Folgendes umfasst:
Übertragen einer Angabe eines angepassten Rahmenratenleistungsindikators basierend zumindest teilweise auf dem UE-modifizierten Leistungsprofil.

5. Verfahren nach Anspruch 1, wobei das Übertragen (320, 350, 1205) der Angabe der Anpassung Folgendes umfasst:
Übertragen einer Angabe eines angepassten Auflösungsleistungsindikators basierend zumindest teilweise auf dem UE-modifizierten Leistungsprofil; oder
Verfahren nach Anspruch 1, wobei das Übertragen (320, 350, 1205) der Angabe der Anpassung Folgendes umfasst:
Übertragen einer Angabe eines angepassten Bitratenleistungsindikators basierend zumindest teilweise auf dem UE-modifizierten Leistungsprofil; oder
Verfahren nach Anspruch 1, wobei das Übertragen (320, 350, 1205) der Angabe der Anpassung Folgendes umfasst:
Übertragen einer Angabe eines angepassten Bandbreitenindikators basierend zumindest teilweise auf dem UE-modifizierten Leistungsprofil.

6. Verfahren nach Anspruch 1, wobei das Übertragen (320, 350, 1205) der Angabe der Anpassung Folgendes umfasst:
Übertragen einer Angabe eines angepassten Latenzindikators basierend zumindest teilweise auf dem UE-modifizierten Leistungsprofil; oder
Verfahren nach Anspruch 1, ferner umfassend:
Übertragen (360) einer Anforderung an das drahtlose Netzwerk, die eine Änderung eines Dienstqualitätsparameters anfordert, der zwischen dem UE und dem drahtlosen Netzwerk für eine Anwendungsdatensitzung ausgehandelt wird, über die der Anwendungsdatenverkehr basierend zumindest teilweise auf dem UE-modifizierten Leistungsprofil kommuniziert wird; oder
Verfahren nach Anspruch 1, wobei das Kommunizieren (330, 370, 1210) des Anwendungsdatenverkehrs Folgendes umfasst:
Kommunizieren des Anwendungsdatenverkehrs mit einem Edge-Anwendungsserver des Edge-Datennetzwerks (210); oder
Verfahren nach Anspruch 1, wobei das Übertragen (320, 350, 1205) der Angabe der Anpassung Folgendes umfasst:
Übertragen der Angabe der Anpassung an einen Edge-Enabler-Server, einen Edge-Konfigurationsserver oder beides.

7. Verfahren für drahtlose Kommunikationen durch einen Edge-Server eines Edge-Datennetzwerks (210), umfassend:
Übertragen (310, 1505), an ein Benutzergerät, UE (115, 115-a, 115-b), über ein drahtloses Netzwerk, einer Angabe von einem oder mehreren Leistungsindikatoren für einen Anwendungsclient (220), der nicht weiß, dass Edge-Dienstunterstützung über das Edge-Datennetzwerk (210) verfügbar ist;
Übertragen (315, 1510), an das UE über das drahtlose Netzwerk, einer Edge-Dienstunterstützungsnachricht, die Edge-Dienstunterstützung für den Anwendungsclient (220) angibt;
Empfangen (320, 350, 1405), von dem UE (115, 115-a, 115-b), über das drahtlose Netzwerk, einer Angabe einer Anpassung an den einen oder die mehreren Leistungsindikatoren für den Anwendungsclient (220), der auf dem UE arbeitet, um Dienst von dem Edge-Datennetzwerk zu empfangen, wobei die Anpassung an den einen oder die mehreren Leistungsindikatoren zumindest teilweise auf einem UE-modifizierten Leistungsprofil für den Anwendungsclient (220) basiert; und
Kommunizieren (330, 370, 1410) von Anwendungsdatenverkehr mit dem UE über das drahtlose Netzwerk, um Edge-Dienst für den Anwendungsclient (220) gemäß dem einen oder den mehreren angepassten Leistungsindikatoren bereitzustellen.

8. Verfahren nach Anspruch 7, ferner umfassend:
Empfangen (350), von dem UE über das drahtlose Netzwerk, einer Angabe einer zweiten Anpassung an einen oder mehrere Leistungsindikatoren für den Anwendungsclient (220) basierend zumindest auf einer Aktualisierung des UE-modifizierten Leistungsprofils für den Anwendungsclient (220); oder
Verfahren nach Anspruch 7, wobei das Empfangen (320, 350, 1405) der Angabe der Anpassung Folgendes umfasst:
Empfangen (1525) einer Angabe eines ersten angepassten Leistungsfaktors, um anzugeben, dass die Verarbeitung des Anwendungsdatenverkehrs durch das UE durchzuführen ist, durch das Edge-Datennetzwerk (210) durchzuführen ist oder zwischen dem UE und dem Edge-Datennetzwerk (210) aufzuteilen ist.

9. Verfahren nach Anspruch 7, wobei das UE-modifizierte Leistungsprofil für den Anwendungsclient (220) eine Anpassung an den einen oder die mehreren Leistungsindikatoren basierend zumindest teilweise auf einem verfügbaren Netzwerkdienstqualitätsleistungsparameter, einem aktuellen Funkverbindungsqualitätsparameter, einem UE-Wärmeparameter, einem UE-Prozessorlastparameter, einem UE-Speicherverfügbarkeitsparameter, einem UE-Memoryverfügbarkeitsparameter, einem Edge-Ressourcenverfügbarkeitsparameter, einem Anwendungsdatenzeitempfindlichkeitsparameter, einem vorhergesagten Änderungsparameter, einem vorhergesagten Dienstqualitätsänderungsparameter, einem vorhergesagten Benutzerverhaltensparameter, einem Sicherheitsparameter, einem Privatsphärenparameter oder einer beliebigen Kombination davon angibt; oder
Verfahren nach Anspruch 7, wobei das Empfangen (320, 350, 1405) der Angabe der Anpassung Folgendes umfasst:
Empfangen, basierend zumindest teilweise auf dem UE-modifizierten Leistungsprofil, einer Angabe eines angepassten Rahmenratenleistungsindikators oder einer Angabe eines angepassten Auflösungsleistungsindikators oder einer Angabe eines angepassten Bitratenleistungsindikators oder einer Angabe eines angepassten Bandbreitenindikators oder einer Angabe eines angepassten Latenzindikators oder einer beliebigen Kombination davon.

10. Verfahren nach Anspruch 7, ferner umfassend:
Übertragen einer Anforderung an das drahtlose Netzwerk, die eine Änderung eines Dienstqualitätsparameters anfordert, der zwischen dem UE und dem drahtlosen Netzwerk für eine Anwendungsdatensitzung ausgehandelt wird, über die der Anwendungsdatenverkehr basierend zumindest teilweise auf dem einen oder den mehreren angepassten Leistungsindikatoren kommuniziert wird; oder
Verfahren nach Anspruch 7, wobei das drahtlose Netzwerk ein zellulares Netzwerk ist.

11. Vorrichtung für drahtlose Kommunikationen, umfassend:
Mittel zum Empfangen, von einem Edge-Datennetzwerk (210) über ein drahtloses Netzwerk, einer Angabe von einem oder mehreren Leistungsindikatoren für einen Anwendungsclient (220), der nicht weiß, dass Edge-Dienstunterstützung über das Edge-Datennetzwerk (210) verfügbar ist;
Mittel zum Empfangen, von dem Edge-Datennetzwerk (210) über das drahtlose Netzwerk, einer Edge-Dienstunterstützungsnachricht, die Edge-Dienstunterstützung für den Anwendungsclient (220) angibt;
Mittel zum Übertragen, an das Edge-Datennetzwerk (210) über das drahtlose Netzwerk, einer Angabe einer Anpassung an den einen oder die mehreren Leistungsindikatoren für den Anwendungsclient (220), der auf der Vorrichtung arbeitet, um Dienst von dem Edge-Datennetzwerk (210) zu empfangen, wobei die Anpassung an den einen oder die mehreren Leistungsindikatoren zumindest teilweise auf einem vorrichtungsmodifizierten Leistungsprofil für den Anwendungsclient (220) basiert; und
Mittel zum Kommunizieren von Anwendungsdatenverkehr mit dem Edge-Datennetzwerk (210) über das drahtlose Netzwerk, um Edge-Dienst für den Anwendungsclient (220) gemäß dem einen oder den mehreren angepassten Leistungsindikatoren bereitzustellen.

12. Vorrichtung für drahtlose Kommunikation nach Anspruch 11, ferner umfassend Mittel zum Ausführen des Verfahrens nach einem der Ansprüche 2 bis 6.

13. Vorrichtung für drahtlose Kommunikationen eines Edge-Datennetzwerks (210), umfassend:
Mittel zum Übertragen, an ein Benutzergerät, UE (115, 115-a, 115-b), über ein drahtloses Netzwerk, einer Angabe von einem oder mehreren Leistungsindikatoren für einen Anwendungsclient (220), der nicht weiß, dass Edge-Dienstunterstützung über das Edge-Datennetzwerk (210) verfügbar ist;
Mittel zum Übertragen, an das UE über das drahtlose Netzwerk, einer Edge-Dienstunterstützungsnachricht, die Edge-Dienstunterstützung für den Anwendungsclient (220) angibt;
Mittel zum Empfangen, von dem UE (115, 115-a, 115-b) über das drahtlose Netzwerk, einer Angabe einer Anpassung an den einen oder die mehreren Leistungsindikatoren für den Anwendungsclient (220), der auf dem UE arbeitet, um Dienst von dem Edge-Datennetzwerk (210) zu empfangen, wobei die Anpassung an den einen oder die mehreren Leistungsindikatoren zumindest teilweise auf einem UE-modifizierten Leistungsprofil für den Anwendungsclient (220) basiert; und
Mittel zum Kommunizieren von Anwendungsdatenverkehr mit dem UE über das drahtlose Netzwerk, um Edge-Dienst für den Anwendungsclient (220) gemäß dem einen oder den mehreren angepassten Leistungsindikatoren bereitzustellen.

14. Vorrichtung für drahtlose Kommunikation nach Anspruch 13, ferner umfassend Mittel zum Ausführen des Verfahrens nach einem der Ansprüche 8 bis 10.

15. Computerprogramm, umfassend Anweisungen, die, wenn das Programm von einem Computer ausgeführt wird, den Computer veranlassen, das Verfahren nach einem der Ansprüche 1 bis 6 oder 7 bis 10 auszuführen.

## Revendications

1. Un procédé de communication sans fil par un équipement utilisateur, UE (115, 115-a, 115-b), comprenant :
la réception (310, 1305), en provenance d'un réseau de données edge (210) via un réseau sans fil, d'une indication d'un ou plusieurs indicateurs de performance pour un client d'application (220) qui n'est pas conscient qu'un support de service edge est disponible via le réseau de données edge (210) ;
la réception (315, 1310), en provenance du réseau de données edge via le réseau sans fil, d'un message de support de service edge indiquant un support de service edge pour le client d'application (220) ;
la transmission (320, 350, 1205), au réseau de données edge (210) via le réseau sans fil, d'une indication d'un ajustement des un ou plusieurs indicateurs de performance pour le client d'application (220) fonctionnant sur l'UE pour recevoir un service du réseau de données edge, l'ajustement des un ou plusieurs indicateurs de performance étant sur la base au moins en partie d'un profil de performance modifié par l'UE pour le client d'application (220) ; et
la communication (330, 370, 1210) d'un trafic de données d'application avec le réseau de données edge (210) via le réseau sans fil pour fournir un service edge au client d'application (220) conformément aux un ou plusieurs indicateurs de performance ajustés.

2. Le procédé selon la revendication 1,
dans lequel la transmission (320, 350, 1205) de l'indication de l'ajustement comprend : la transmission de l'indication de l'ajustement sur la base au moins en partie du message de support de service edge.

3. Le procédé selon la revendication 1, comprenant en outre :
la transmission (1315) d'une indication d'un second ajustement sur les un ou plusieurs indicateurs de performance pour le client d'application (220) sur la base au moins d'une mise à jour du profil de performance modifié par l'UE pour le client d'application (220) ; ou
le procédé selon la revendication 1, comprenant en outre :
la transmission (355, 1325), à une station de base du réseau sans fil, d'une indication d'un ajustement sur un indicateur de performance de ressource radio sur la base au moins en partie du profil de performance modifié par l'UE, dans lequel le trafic de données d'application est communiqué via la station de base du réseau sans fil conformément à l'indicateur de performance de ressource radio ajusté ; ou
le procédé selon la revendication 1, dans lequel la transmission (320, 350, 1205) de l'indication de l'ajustement comprend :
la transmission (1330) d'une indication d'un premier facteur de performance ajusté pour indiquer que le traitement du trafic de données d'application doit être réalisé par l'UE, doit être réalisé par le réseau de données edge (210), ou doit être divisé entre l'UE et le réseau de données edge (210).

4. Le procédé selon la revendication 1, comprenant en outre :
la surveillance (340) d'une exécution du client d'application (220) pour générer des données empiriques ;
et
la génération (345) du profil de performance modifié par l'UE sur la base au moins en partie des données empiriques ;
ou
le procédé selon la revendication 1, dans lequel le profil de performance modifié par l'UE indique, pour le client d'application (220), un ajustement des un ou plusieurs indicateurs de performance sur la base au moins en partie d'un paramètre de performance de qualité de service de réseau disponible, d'un paramètre de qualité courante de liaison radio, d'un paramètre UE thermique, d'un paramètre UE de charge de processeur, d'un paramètre UE de disponibilité de stockage, d'un paramètre UE de disponibilité de mémoire, d'un paramètre de disponibilité de ressource edge, d'un paramètre de sensibilité temporelle des données d'application, d'un paramètre de changement prédit, d'un paramètre de changement de qualité de service prédit, d'un paramètre de comportement utilisateur prédit, d'un paramètre de sécurité, d'un paramètre de confidentialité ou toute combinaison de ceux-ci ; ou
le procédé selon la revendication 1, dans lequel la transmission (320, 350, 1205) de l'indication de l'ajustement comprend :
la transmission d'une indication d'un indicateur de performance de cadence de trame ajusté, sur la base au moins en partie du profil de performance modifié par l'UE.

5. Le procédé selon la revendication 1, dans lequel la transmission (320, 350, 1205) de l'indication de l'ajustement comprend :
la transmission d'une indication d'un indicateur de performance de résolution ajusté, sur la base au moins en partie du profil de performance modifié par l'UE ; ou
le procédé selon la revendication 1, dans lequel la transmission (320, 350, 1205) de l'indication de l'ajustement comprend :
la transmission d'une indication d'un indicateur de performance de débit binaire ajusté, sur la base au moins en partie du profil de performance modifié par l'UE ; ou
le procédé selon la revendication 1, dans lequel la transmission (320, 350, 1205) de l'indication de l'ajustement comprend :
la transmission d'une indication d'un indicateur de largeur de bande ajusté, sur la base au moins en partie du profil de performance modifié par l'UE.

6. Le procédé selon la revendication 1, dans lequel la transmission (320, 350, 1205) de l'indication de l'ajustement comprend :
la transmission d'une indication d'un indicateur de latence ajusté, sur la base au moins en partie du profil de performance modifié par l'UE ; ou
le procédé selon la revendication 1, comprenant en outre :
la transmission (360) au réseau sans fil d'une requête requérant une modification d'un paramètre de qualité de service négocié entre l'UE et le réseau sans fil pour une session de données d'application par le biais de laquelle le trafic de données d'application est communiqué sur la base au moins en partie du profil de performance modifié par l'UE ; ou
le procédé selon la revendication 1, dans lequel la communication (330, 370, 1210) du trafic de données d'application comprend :
la communication du trafic de données d'application avec un serveur d'application edge du réseau de données edge (210) ; ou
le procédé selon la revendication 1, dans lequel la transmission (320, 350, 1205) de l'indication de l'ajustement comprend :
la transmission de l'indication de l'ajustement à un serveur d'activation edge, à un serveur de configuration edge, ou aux deux.

7. Un procédé de communication sans fil par un serveur edge d'un réseau de données edge (210), comprenant :
la transmission (310, 1505), à un équipement utilisateur, UE (115, 115-a, 115-b) via un réseau sans fil, d'une indication d'un ou plusieurs indicateurs de performance pour un client d'application (220) qui n'est pas conscient qu'un support de service edge est disponible via le réseau de données edge (210) ;
la transmission (315, 1510), à l'UE via le réseau sans fil, d'un message de support de service edge indiquant le support de service edge pour le client d'application (220) ;
la réception (320, 350, 1405), en provenance de l'UE (115, 115-a, 115-b), via le réseau sans fil, d'une indication d'un ajustement des un ou plusieurs indicateurs de performance pour le client d'application (220) fonctionnant sur l'UE pour recevoir un service du réseau de données edge, l'ajustement des un ou plusieurs indicateurs de performance étant basé au moins en partie sur un profil de performance modifié par l'UE pour le client d'application (220) ; et
la communication (330, 370, 1410) d'un trafic de données d'application avec l'UE via le réseau sans fil pour délivrer un service edge au client d'application (220) conformément aux un ou plusieurs indicateurs de performance ajustés.

8. Le procédé selon la revendication 7, comprenant en outre :
la réception (350), en provenance de l'UE via le réseau sans fil, d'une indication d'un second ajustement d'un ou plusieurs indicateurs de performance pour le client d'application (220), sur la base au moins d'une mise à jour du profil de performance modifié par l'UE pour le client d'application (220) ; ou
le procédé selon la revendication 7, dans lequel la réception (320, 350, 1405) de l'indication de l'ajustement comprend :
la réception (1525) d'une indication d'un premier facteur de performance ajusté pour indiquer que le traitement du trafic de données d'application doit être réalisé par l'UE, doit être réalisé par le réseau de données edge (210), ou doit être divisé entre l'UE et le réseau de données edge (210).

9. Le procédé selon la revendication 7, dans lequel le profil de performance modifié par l'UE indique, pour le client d'application (220), un ajustement des un ou plusieurs indicateurs de performance sur la base au moins en partie d'un paramètre de performance de qualité de service de réseau disponible, d'un paramètre de qualité de liaison radio courante, d'un paramètre UE thermique, d'un paramètre UE de charge de processeur, d'un paramètre UE de disponibilité de stockage, d'un paramètre UE de disponibilité de mémoire, d'un paramètre de disponibilité de ressource edge, d'un paramètre de sensibilité temporelle des données d'application, d'un paramètre de changement prédit, d'un paramètre de changement de qualité de service prédit, d'un paramètre de comportement utilisateur prédit, d'un paramètre de sécurité, d'un paramètre de confidentialité ou toute combinaison de ceux-ci ; ou
le procédé selon la revendication 7, dans lequel la réception (320, 350, 1405) de l'indication de l'ajustement comprend :
la réception, sur la base au moins en partie du profil de performance modifié par l'UE, d'une indication d'un indicateur de performance de cadence de trame ajusté, ou d'une indication d'un indicateur de performance de résolution ajusté, ou d'une indication d'un indicateur de performance de débit binaire ajusté, ou d'une indication d'un indicateur de largeur de bande ajusté, ou d'une indication d'un indicateur de latence ajusté, ou de toute combinaison de celles-ci.

10. Le procédé selon la revendication 7, comprenant en outre :
la transmission au réseau sans fil d'une requête requérant une modification d'un paramètre de qualité de service négocié entre l'UE et le réseau sans fil pour une session de données d'application par le biais de laquelle le trafic de données d'application est communiqué sur la base au moins en partie des un ou plusieurs indicateurs de performance ajustés ; ou
le procédé selon la revendication 7, dans lequel le réseau sans fil est un réseau cellulaire.

11. Un appareil pour la communication sans fil, comprenant :
un moyen pour recevoir, en provenance d'un réseau de données edge (210) via un réseau sans fil, une indication d'un ou plusieurs indicateurs de performance pour un client d'application (220) qui n'est pas conscient qu'un support de service edge est disponible via le réseau de données edge (210) ;
un moyen pour recevoir, en provenance du réseau de données edge (210) via le réseau sans fil, un message de support de service edge indiquant un support de service edge pour le client d'application (220) ;
un moyen pour transmettre, au réseau de données edge (210) via le réseau sans fil, une indication d'un ajustement des un ou plusieurs indicateurs de performance pour le client d'application (220) fonctionnant sur l'appareil pour recevoir un service du réseau de données edge (210), l'ajustement des un ou plusieurs indicateurs de performance étant basé au moins en partie sur un profil de performance modifié par l'appareil pour le client d'application (220) ; et
un moyen pour communiquer un trafic de données d'application avec le réseau de données edge (210) via le réseau sans fil pour délivrer un service edge au client d'application (220) conformément aux un ou plusieurs indicateurs de performance ajustés.

12. Un appareil pour la communication sans fil selon la revendication 11, comprenant en outre des moyens pour réaliser le procédé selon l'une des revendications 2 à 6.

13. Un appareil pour la communication sans fil d'un réseau de données edge (210), comprenant :
un moyen pour transmettre, à un équipement utilisateur, UE (115, 115-a, 115-b) via un réseau sans fil, une indication d'un ou plusieurs indicateurs de performance pour un client d'application (220) qui n'est pas conscient qu'un support de service edge est disponible via le réseau de données edge (210) ;
un moyen pour transmettre, à l'UE via le réseau sans fil, un message de support de service edge indiquant le support de service edge pour le client d'application (220) ;
un moyen pour recevoir, en provenance de l'UE (115, 115-a, 115-b), via le réseau sans fil, une indication d'un ajustement des un ou plusieurs indicateurs de performance pour le client d'application (220) fonctionnant sur l'UE pour recevoir un service du réseau de données edge (210), l'ajustement des un ou plusieurs indicateurs de performance étant basé au moins en partie sur un profil de performance modifié par l'UE pour le client d'application (220) ; et
un moyen pour communiquer un trafic de données d'application avec l'UE via le réseau sans fil pour délivrer un service edge au client d'application (220) conformément aux un ou plusieurs indicateurs de performance ajustés.

14. L'appareil pour la communication sans fil selon la revendication 13, comprenant en outre des moyens pour réaliser le procédé selon l'une des revendications 8 à 10.

15. Un programme de calculateur comprenant des instructions qui, lorsque le programme est exécuté par un calculateur, amènent le calculateur à réaliser le procédé selon l'une des revendications 1 à 6 ou 7 à 10.
